# EUROPEAN PATENT SPECIFICATION

(11) **EP 4 600 834 B1**
(45) Date of publication and mention of the grant of the patent: **21.01.2026**
(21) Application number: 25156256.7
(22) Date of filing: 06.02.2025
(51) Int. Cl.: G06F 12/0895

(54) **SYSTEMS AND METHODS OF INSTRUCTION SETS FOR CACHE PROCESSORS**
SYSTEME UND VERFAHREN FÜR ANWEISUNGSSÄTZE FÜR CACHE-PROZESSOREN
SYSTÈMES ET PROCÉDÉS D'ENSEMBLES D'INSTRUCTIONS POUR PROCESSEURS DE MÉMOIRE CACHE

(30) Priority: 08.02.2024 US 202463551488 P; 29.01.2025 US 202519040858
(43) Date of publication of application: 13.08.2025
(73) Proprietor: Samsung Electronics Co., Ltd., Suwon-si, Gyeonggi-do 16677 (KR)
(72) Inventor: LI, Zongwang, San Jose, CA, 95134 (US); KI, Yang Seok, San Jose, CA, 95134 (US); PITCHUMANI, Rekha, San Jose, CA, 95134 (US)
(74) Representative: Kuhnen & Wacker Patent- und Rechtsanwaltsbüro PartG mbB

(56) References cited:
- US-A- 6 014 728

## Description

### TECHNICAL FIELD

The disclosure relates generally to memory systems. In particular, the subject matter relates to systems and methods of instruction sets for cache processor (e.g., of tiered memory devices).

### BACKGROUND

The present background section is intended to provide context only, and the disclosure of any concept in this section does not constitute an admission that said concept is prior art.

Memory management includes a form of resource management applied to computer memory. Some aspects of memory management include providing dynamic allocation of portions of memory to programs at the programs' request, and free the allocations for reuse when the portions of memory are no longer needed. Improvements in memory management are needed with regards to high-performance computing and artificial intelligence (AI) systems. US 6014728 A discloses a programmable cache.

### SUMMARY

The invention is set out in the appended set of claims. The dependent claims set out particular embodiments.

In various embodiments, the systems and methods described herein include systems, methods, and apparatuses of instruction sets for cache processor (e.g., of tiered memory devices). In some aspects, the techniques described herein relate to a method of programmable cache algorithms, the method including: receiving, from a memory controller, a memory request based on a first cache processor of a cache executing a poll command of an instruction set that is configured to program at least one aspect of the cache in association with at least one of a cache control and status register (CSR) or a device CSR; determining that data associated with the memory request is stored in the cache based on the first cache processor querying a metadata of a shared memory that is shared with a second cache processor of the cache; and processing, via the first cache processor, the memory request based on determining that the data associated with the memory request is stored in the cache.

In some aspects, the techniques described herein relate to a method, wherein processing the memory request includes the first cache processor reading the data associated with the memory request from the cache based on the memory request including a read request.

In some aspects, the techniques described herein relate to a method, wherein processing the memory request includes the first cache processor modifying the data that is in the cache and associated with the memory request based on the memory request including a write request.

In some aspects, the techniques described herein relate to a method, wherein processing the memory request includes the first cache processor executing a tag load command of the instruction set to load a tag of data in the cache to a tag register, executing a tag compare command of the instruction set to compare the tag of the data in the cache to a tag of the data associated with the memory request, updating an access frequency attribute of the tag of the data in the cache, and executing a tag store command of the instruction set to store, in the metadata of the shared memory, the updated tag of the data in the cache.

In some aspects, the techniques described herein relate to a method, further including determining a memory address of the data associated with the memory request based on the first cache processor querying the cache CSR.

In some aspects, the techniques described herein relate to a method, wherein the first cache processor querying the metadata is based on the first cache processor querying the device CSR for an address of the metadata.

In some aspects, the techniques described herein relate to a method, wherein the first cache processor executing the poll command of the instruction set is based on the first cache processor querying the device CSR for a starting address of a cache request routine.

In some aspects, the techniques described herein relate to a method, further including accessing, via the first cache processor, a storage device to process the second memory request, the storage device being accessed based on the first cache processor determining a state of data associated with a second memory request in relation to the cache and the storage device.

In some aspects, the techniques described herein relate to a method, wherein processing the memory request includes the first cache processor writing data to the storage device based on the second memory request including a second write request or reading data from the storage device based on the second memory request including a second read request.

In some aspects, the techniques described herein relate to a method, wherein processing the second memory request includes the first cache processor executing a tag load command of the instruction set to load a tag of data in the cache to a tag register, executing a tag compare command of the instruction set to compare the tag of data in the cache to a tag of the data associated with the second memory request.

In some aspects, the techniques described herein relate to a method, wherein processing the second memory request includes the second cache processor: determining that the cache includes available space to store the data associated with the second memory request based on the second cache processor querying the cache CSR for aa status of the cache; copying the data associated with the second memory request from a storage device to the cache based on the second memory request including a read request or writing the data associated with the second memory request to the cache based on the second memory request including a write request; and executing a tag store command of the instruction set to store, in the metadata of the shared memory, a tag of the data associated with the second memory request.

In some aspects, the techniques described herein relate to a method, wherein processing the second memory request includes the second cache processor: determining that the cache is full based on the second cache processor querying the cache CSR for a status of the cache; evicting a portion of data from the cache based on the second cache processor implementing an eviction policy that the second cache processor indicates in at least one command of the instruct set; and writing the portion of data evicted from the cache to a storage device based on the second cache processor determining a mismatch between the portion of data evicted from the cache and data in the storage device associated with the portion of data evicted from the cache.

In some aspects, the techniques described herein relate to a method, wherein: the instruction set is implemented on a cache-coherent tiered memory device that includes the memory controller, the cache, the first cache processor, the second cache processor, and a storage device, the cache includes a dynamic random-access memory, and the storage device includes a NAND storage device.

In some aspects, the techniques described herein relate to a cache device, including: a cache; a storage device; a memory controller; a first cache processor; and a second cache processor, wherein: the memory controller is configured to receive a memory request based on the first cache processor executing a poll command of an instruction set that is configured to program at least one aspect of the cache in association with at least one of a cache control and status register (CSR) or a device CSR; the first cache processor is configured to determine that data associated with the memory request is stored in the cache based on the first cache processor querying a metadata of a shared memory that is shared with the second cache processor; and the first cache processor is configured to process the memory request based on determining that the data associated with the memory request is stored in the cache.

In some aspects, the techniques described herein relate to a cache device, wherein the first cache processor processing the memory request includes the first cache processor reading the data associated with the memory request from the cache based on the memory request including a read request.

In some aspects, the techniques described herein relate to a cache device, wherein the first cache processor processing the memory request includes the first cache processor modifying the data that is in the cache and associated with the memory request based on the memory request including a write request.

In some aspects, the techniques described herein relate to a cache device, wherein the first cache processor processing the memory request includes the first cache processor executing a tag load command of the instruction set to load a tag of data in the cache to a tag register, executing a tag compare command of the instruction set to compare the tag of the data in the cache to a tag of the data associated with the memory request, updating an access frequency attribute of the tag of the data in the cache, and executing a tag store command of the instruction set to store, in the metadata of the shared memory, the updated tag of the data in the cache.

In some aspects, the techniques described herein relate to a cache device, further including the first cache processor being configured to determine a memory address of the data associated with the memory request based on the first cache processor querying the cache CSR.

In some aspects, the techniques described herein relate to a non-transitory computer-readable medium storing code that includes instructions executable by a first cache processor to: receive, from a memory controller, a memory request based on the first cache processor executing a poll command of an instruction set that is configured to program at least one aspect of a cache in association with at least one of a cache control and status register (CSR) or a device CSR; determine that data associated with the memory request is stored in the cache based on the first cache processor querying a metadata of a shared memory that is shared with a second cache processor of the cache; and process the memory request based on determining that the data associated with the memory request is stored in the cache.

In some aspects, the techniques described herein relate to a non-transitory computer-readable medium, wherein the first cache processor processing the memory request includes the first cache processor reading the data associated with the memory request from the cache based on the memory request including a read request.

A computer-readable medium is disclosed. The computer-readable medium can store instructions that, when executed by a computer, cause the computer to perform substantially the same or similar operations as described herein are further disclosed. Similarly, non-transitory computer-readable media, devices, and systems for performing substantially the same or similar operations as described herein are further disclosed.

The systems and methods described herein include multiple advantages and benefits. For example, the systems and methods of instruction sets for cache processor (e.g., of tiered memory devices) described herein have a relatively high throughput and increase memory bandwidth of a given system. The systems and methods described herein enable a user to program cache algorithms based on cache processor instruction sets. The cache algorithms (e.g., custom cache algorithms) can be downloaded to device memory (e.g., device command memory). The systems and methods described herein provide cache instruction sets that enable a user to adapt cache algorithms to a given workload of an application Based on the systems and methods of programmable cache processors described herein, devices (e.g., CXL tiered memory devices and systems) can be enhanced to support broad applications with improved performance. The systems and methods described herein reduce latency associated with memory operations of tiered memory devices. Additionally, the systems and methods of instruction sets for cache processor (e.g., of tiered memory devices) described herein have a relatively low implementation cost.

### BRIEF DESCRIPTION OF THE DRAWINGS

The above-mentioned aspects and other aspects of the present systems and methods will be better understood when the present application is read in view of the following figures in which like numbers indicate similar or identical elements. Further, the drawings provided herein are for purpose of illustrating certain embodiments only; other embodiments, which may not be explicitly illustrated, are not excluded from the scope of this disclosure.

These and other features and advantages of the present disclosure will be appreciated and understood with reference to the specification, claims, and appended drawings, wherein:
FIG. 1 illustrates an example system in accordance with one or more implementations as described herein.
FIG. 2 illustrates details of the system of FIG. 1, according to one or more implementations as described herein.
FIG. 3 illustrates an example system in accordance with one or more implementations as described herein.
FIG. 4 illustrates an example data structure in accordance with one or more implementations as described herein.
FIG. 5 illustrates an example data structure in accordance with one or more implementations as described herein.
FIG. 6 illustrates an example data structure in accordance with one or more implementations as described herein.
FIGs. 7-14 illustrate example commands in accordance with one or more implementations as described herein.
FIG. 15 depicts a flow diagram illustrating an example method associated with the disclosed systems, in accordance with example implementations described herein.
FIG. 16 depicts a flow diagram illustrating an example method associated with the disclosed systems, in accordance with example implementations described herein.

While the present systems and methods are susceptible to various modifications and alternative forms, specific embodiments thereof are shown by way of example in the drawings and will herein be described. The drawings may not be to scale.

### DETAILED DESCRIPTION OF VARIOUS EMBODIMENTS

The details of one or more embodiments of the subject matter described herein are set forth in the accompanying drawings and the description below. Other features, aspects, and advantages of the subject matter will become apparent from the description, the drawings, and the claims.

Various embodiments of the present disclosure now will be described more fully hereinafter with reference to the accompanying drawings, in which some, but not all embodiments are shown. Indeed, the disclosure may be embodied in many forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Like numbers refer to like elements throughout. Arrows in each of the figures depict bi-directional data flow and/or bi-directional data flow capabilities. The terms "path," "pathway" and "route" are used interchangeably herein.

Embodiments of the present disclosure may be implemented in various ways, including as computer program products that comprise articles of manufacture. A computer program product may include a non-transitory computer-readable storage medium storing applications, programs, program components, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

In one embodiment, a non-volatile computer-readable storage medium may include a floppy disk, flexible disk, hard disk, solid-state storage (SSS) (for example a solid-state drive (SSD)), solid state card (SSC), solid state module (SSM), enterprise flash drive, magnetic tape, or any other non-transitory magnetic medium, and/or the like. A non-volatile computer-readable storage medium may include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may include read-only memory (ROM), programmable read-only memory (PROM), erasable programmable read-only memory (EPROM), electrically erasable programmable read-only memory (EEPROM), flash memory (for example Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In one embodiment, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory component (RIMM), dual in-line memory component (DIMM), single in-line memory component (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may be implemented as methods, apparatus, systems, computing devices, computing entities, and/or the like. As such, embodiments of the present disclosure may take the form of an apparatus, system, computing device, computing entity, and/or the like executing instructions stored on a computer-readable storage medium to perform certain steps or operations. Thus, embodiments of the present disclosure may take the form of a hardware embodiment, a computer program product embodiment, and/or an embodiment that comprises a combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, a hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially, such that one instruction is retrieved, loaded, and executed at a time. In some example embodiments, retrieval, loading, and/or execution may be performed in parallel, such that multiple instructions are retrieved, loaded, and/or executed together. Thus, such embodiments can produce specifically configured machines performing the steps or operations specified in the block diagrams and flowchart illustrations. Accordingly, the block diagrams and flowchart illustrations support various combinations of embodiments for performing the specified instructions, operations, or steps.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not be necessarily all referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "predetermined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. Similarly, various waveforms and timing diagrams are shown for illustrative purpose only. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on chip (SoC), an assembly, and so forth.

The provided description is presented to enable one of ordinary skill in the art to make and use the subject matter disclosed herein and to incorporate it in the context of particular applications. While the following is directed to specific examples, other and further examples may be devised without departing from the basic scope thereof.

Various modifications, as well as a variety of uses in different applications, will be readily apparent to those skilled in the art, and the general principles defined herein may be applied to a wide range of embodiments. Thus, the subject matter disclosed herein is not intended to be limited to the embodiments presented, but is to be accorded the widest scope consistent with the principles and novel features disclosed herein.

In the description provided, numerous specific details are set forth in order to provide a more thorough understanding of the subject matter disclosed herein. It will, however, be apparent to one skilled in the art that the subject matter disclosed herein may be practiced without necessarily being limited to these specific details. In other instances, well-known structures and devices are shown in block diagram form, rather than in detail, in order to avoid obscuring the subject matter disclosed herein.

All the features disclosed in this specification (e.g., any accompanying claims, abstract, and drawings) may be replaced by alternative features serving the same, equivalent or similar purpose, unless expressly stated otherwise. Thus, unless expressly stated otherwise, each feature disclosed is one example only of a generic series of equivalent or similar features.

Various features are described herein with reference to the figures. It should be noted that the figures are only intended to facilitate the description of the features. The various features described are not intended as an exhaustive description of the subject matter disclosed herein or as a limitation on the scope of the subject matter disclosed herein. Additionally, an illustrated example need not have all the aspects or advantages shown. An aspect or an advantage described in conjunction with a particular example is not necessarily limited to that example and can be practiced in any other examples even if not so illustrated, or if not so explicitly described.

It is noted that, if used, the labels left, right, front, back, top, bottom, forward, reverse, clockwise and counterclockwise have been used for convenience purposes only and are not intended to imply any particular fixed direction. Instead, the labels are used to reflect relative locations and/or directions between various portions of an object.

Data processing may include data buffering, aligning incoming data from multiple communication lanes, forward error correction (FEC), etc. For example, data may be received by an analog front end (AFE), which can prepare the incoming data for digital processing. The digital portion of the transceivers (e.g., digital signal processor (DSP)) may provide skew management, equalization, reflection cancellation, and/or other functions. It is to be appreciated that the process described herein can provide many benefits, including saving both power and cost.

Moreover, the terms "system," "component," "module," "interface," "model," or the like are generally intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a controller and the controller can be a component. One or more components may reside within a process and/or thread of execution and a component may be localized on one computer and/or distributed between two or more computers.

Unless explicitly stated otherwise, each numerical value and range may be interpreted as being approximate, as if the word "about" or "approximately" preceded the value of the value or range. Signals and corresponding nodes or ports might be referred to by the same name and are interchangeable for purposes here.

While embodiments may have been described with respect to circuit functions, the embodiments of the subject matter disclosed herein are not limited. Possible implementations may be embodied in a single integrated circuit, a multi-chip module, a single card, SoC, or a multi-card circuit pack. As would be apparent to one skilled in the art, the various embodiments might also be implemented as part of a larger system. Such embodiments may be employed in conjunction with, for example, a digital signal processor, microcontroller, field-programmable gate array, application-specific integrated circuit, or general-purpose computer.

As would be apparent to one skilled in the art, various functions of circuit elements may also be implemented as processing blocks in a software program. Such software may be employed in, for example, a digital signal processor, microcontroller, or general-purpose computer. Such software may be embodied in the form of program code embodied in tangible media, such as magnetic recording media, optical recording media, solid-state memory, floppy diskettes, CD-ROMs, hard drives, or any other non-transitory machine-readable storage medium, that when the program code is loaded into and executed by a machine, such as a computer, the machine becomes an apparatus for practicing the subject matter disclosed herein. When implemented on a general-purpose processor, the program code segments combine with the processor to provide a unique device that operates analogously to specific logic circuits. Described embodiments may also be manifest in the form of a bit stream or other sequence of signal values electrically or optically transmitted through a medium, stored magnetic-field variations in a magnetic recording medium, etc., generated using a method and/or an apparatus as described herein.

A DRAM cache of a device may be used to mask the latency associated with accessing relatively slow media (e.g., NAND storage media). DRAM cache performance can be related to workload characterization, cache parameters, cache eviction algorithms, and other memory management operations. Some systems may use cache with a fixed architecture, where the structure and organization of the cache memory can remain static (e.g., various parameters including, but not limited to, the number of cache lines, set associativity, block size, etc., may be predetermined and cannot be dynamically adjusted based on access patterns or workloads). In some cases, a DRAM cache (e.g., with fixed cache architecture) may use a cache algorithm that is fixed. Cache algorithms can include least recently used (LRU), LRU2Q, most recently used (MRU) algorithm may remove an item that is used the most recently, tiny least frequently used (TinyLFU), three static first in first out (S3-FIFO) cache algorithm that uses FIFO queues to remove objects that are unlikely to be accessed again, and/or apply similar techniques. A cache algorithm can include a cache eviction algorithm and/or a cache replacement algorithm that evicts data from the cache and/or swaps out data when the space is full (e.g., removes a portion of data used the least recently). Based on some systems (e.g., fixed cache systems), there can be limited flexibility in which a suitable eviction / replacement policy may be implemented. In some cases, the eviction / replacement policy and/or associated DRAM cache may not be reconfigurable during runtime (e.g., based on a fixed cache algorithm, based on fixed DRAM cache, etc.). In some cases, performance gains for a system implementing fixed DRAM cache may be limited to a limited number of workloads/applications. Based on the workload characterization of fixed DRAM cache, users may not be allowed to adjust cache algorithms.

The systems and methods described herein describe cache processor instruction sets that support programmable cache algorithms, which can be used to program memory such as DRAM cache. The systems and methods described herein may be based on an instruction set architecture (ISA). The ISA may include at least one of device control and status registers, cache control and status registers, a command word format, an instruction set, and/or programmable functionality and operation. Based on the systems and methods described herein, a fully programmable ISA may be used to enable various user programmable cache algorithms that are configured according to application constraints (e.g., processing constraints, memory bandwidth constraints, network bandwidth constraints, and the like). In some embodiments, ISA execute units that enable programming cache algorithms may be run on cache processor cores. The systems and methods described may include implementing two (or more) separate cache threads based on the design ISA set (e.g., memory request thread, cache eviction thread), which reduces cache processor thread arbitrator overhead. In some embodiments, a set of dedicated ISA for cache algorithms may be used, providing high throughout, low latency, and low implementation cost, while increasing system throughput and decreasing cache latency.

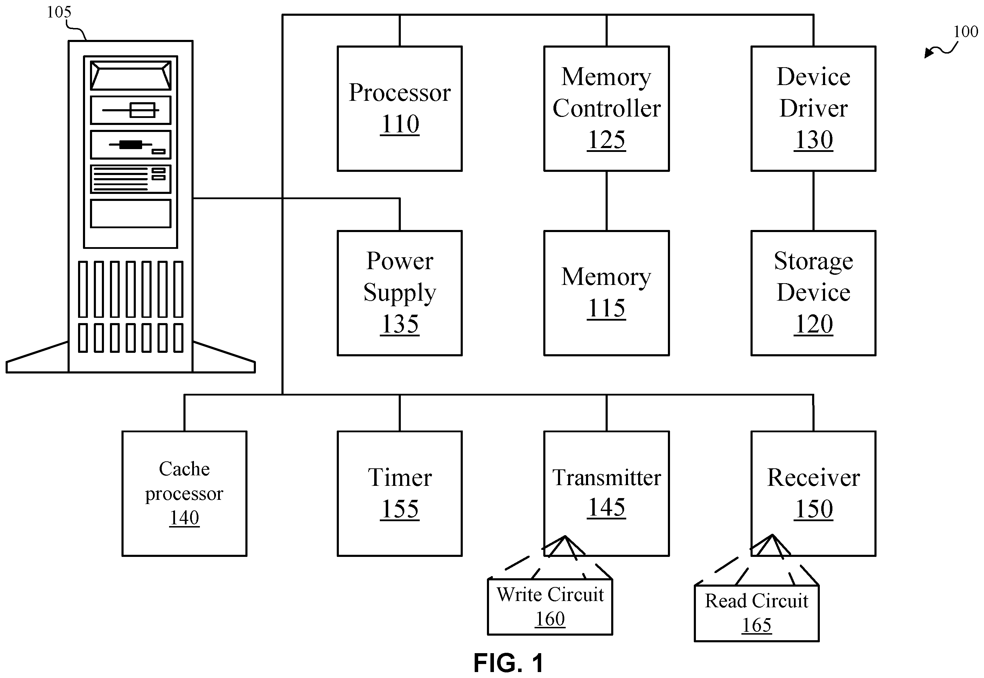

**FIG.** 1 illustrates an example system 100 in accordance with one or more implementations as described herein. In FIG. 1, machine 105, which may be termed a host, a system, or a server, is shown. While FIG. 1 depicts machine 105 as a tower computer, embodiments of the disclosure may extend to any form factor or type of machine. For example, machine 105 may be a rack server, a blade server, a desktop computer, a tower computer, a mini tower computer, a desktop server, a laptop computer, a notebook computer, a tablet computer, etc.

In some implementations, machine 105 may depict a cache-coherent tiered memory device (e.g., CXL tiered memory device). Machine 105 may include processor 110, memory 115, and storage device 120. Processor 110 may be any variety of processor. It is noted that processor 110, along with the other components discussed below, are shown outside the machine for ease of illustration: embodiments of the disclosure may include these components within the machine. While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM), Phase Change Memory (PCM), or Resistive Random-Access Memory (ReRAM). Memory 115 may include volatile and/or non-volatile memory. Memory 115 may use any desired form factor: for example, Single In-Line Memory Module (SIMM), Dual In-Line Memory Module (DIMM), Non-Volatile DIMM (NVDIMM), etc. Memory 115 may be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may support an operating system under which various applications may be running. These applications may issue requests (which may be termed commands) to read data from or write data to either memory 115 or storage device 120. When storage device 120 is used to support applications reading or writing data via some sort of file system, storage device 120 may be accessed using device driver 130. While FIG. 1 shows one storage device 120, there may be any number (one or more) of storage devices in machine 105. Storage device 120 may support any desired protocol or protocols, including, for example, the Non-Volatile Memory Express (NVMe^{®}) protocol, a Serial Attached Small Computer System Interface (SCSI) (SAS) protocol, or a Serial AT Attachment (SATA) protocol. Storage device 120 may include any desired interface, including, for example, a Peripheral Component Interconnect Express (PCIe^{®}) interface, or a Compute Express Link (CXL^{®}) interface. Storage device 120 may take any desired form factor, including, for example, a U.2 form factor, a U.3 form factor, a M.2 form factor, Enterprise and Data Center Standard Form Factor (EDSFF) (including all of its varieties, such as E1 short, E1 long, and the E3 varieties), or an Add-In Card (AIC).

While FIG. 1 uses the term "storage device," embodiments of the disclosure may include any storage device formats that may benefit from the use of computational storage units, examples of which may include hard disk drives, Solid State Drives (SSDs), or persistent memory devices, such as PCM, ReRAM, or MRAM. Any reference to "storage device" "SSD" below should be understood to include such other embodiments of the disclosure and other varieties of storage devices. In some cases, the term "storage unit" may encompass storage device 120 and memory 115. Machine 105 may include power supply 135. Power supply 135 may provide power to machine 105 and its components.

Machine 105 may include transmitter 145 and receiver 150. Transmitter 145 or receiver 150 may be respectively used to transmit or receive data. In some cases, transmitter 145 and/or receiver 150 may be used to communicate with memory 115 and/or storage device 120. Transmitter 145 may include write circuit 160, which may be used to write data into storage, such as a register, in memory 115 and/or storage device 120. In a similar manner, receiver 150 may include read circuit 165, which may be used to read data from storage, such as a register, from memory 115 and/or storage device 120.

In the illustrated example, machine 105 may include timer 155, which may be used to time one or more operations, indicate a time period, indicate a lapse of time, indicate an expiration, indicate a timeout, etc.

In one or more examples, machine 105 may be implemented with any type of apparatus. Machine 105 may be configured as (e.g., as a host of) one or more of a server such as a compute server, a storage server, storage node, a network server, a supercomputer, data center system, and/or the like, or any combination thereof. Additionally, or alternatively, machine 105 may be configured as (e.g., as a host of) one or more of a computer such as a workstation, a personal computer, a tablet, a smartphone, and/or the like, or any combination thereof. Machine 105 may be implemented with any type of apparatus that may be configured as a device including, for example, an accelerator device, a storage device, a network device, a memory expansion and/or buffer device, a central processing unit (CPU), a graphics processing unit (GPU), a neural processing unit (NPU), a tensor processing unit (TPU), optical processing units (OPU), and/or the like, or any combination thereof.

Any communication between devices including machine 105 (e.g., host, computational storage device, and/or any intermediary device) can occur over an interface that may be implemented with any type of wired and/or wireless communication medium, interface, protocol, and/or the like including PCIe, NVMe, Ethernet, NVMe-oF, Compute Express Link (CXL), and/or a coherent protocol such as CXL.mem, CXL.cache, CXL.IO and/or the like, Gen-Z, Open Coherent Accelerator Processor Interface (OpenCAPI), Cache Coherent Interconnect for Accelerators (CCIX), Advanced eXtensible Interface (AXI) and/or the like, or any combination thereof, Transmission Control Protocol/Internet Protocol (TCP/IP), FibreChannel, InfiniBand, Serial AT Attachment (SATA), Small Computer Systems Interface (SCSI), Serial Attached SCSI (SAS), iWARP, any generation of wireless network including 2G, 3G, 4G, 5G, and/or the like, any generation of Wi-Fi, Bluetooth, near-field communication (NFC), and/or the like, or any combination thereof. In some embodiments, the communication interfaces may include a communication fabric including one or more links, buses, switches, hubs, nodes, routers, translators, repeaters, and/or the like. In some embodiments, system 100 may include one or more additional apparatus having one or more additional communication interfaces.

Any of the functionality described herein, including any of the host functionality, device functionally, cache processor 140 functionality, and/or the like, may be implemented with hardware, software, firmware, or any combination thereof including, for example, hardware and/or software combinational logic, sequential logic, timers, counters, registers, state machines, volatile memories such as at least one of or any combination of the following: dynamic random access memory (DRAM) and/or static random access memory (SRAM), nonvolatile memory including flash memory, persistent memory such as cross-gridded nonvolatile memory, memory with bulk resistance change, phase change memory (PCM), and/or the like and/or any combination thereof, complex programmable logic devices (CPLDs), field programmable gate arrays (FPGAs), application specific integrated circuits (ASICs) CPUs including CISC processors such as x86 processors and/or RISC processors such as RISC-V and/or ARM processors), GPUs, NPUs, TPUs, OPUs, and/or the like, executing instructions stored in any type of memory. In some embodiments, one or more components of cache processor 140 may be implemented as an SoC.

In some examples, cache processor 140 may include any one or combination of logic (e.g., logical circuit), hardware (e.g., processing unit, memory, storage), software, firmware, and the like. In some cases, cache processor 140 may perform one or more functions in conjunction with processor 110. In some cases, at least a portion of cache processor 140 may be implemented in or by processor 110 and/or memory 115. The one or more logic circuits of cache processor 140 may include any one or combination of multiplexers, registers, logic gates, arithmetic logic units (ALUs), cache, computer memory, microprocessors, processing units (CPUs, GPUs, NPUs, and/or TPUs), FPGAs, ASICs, etc., that enable cache processor 140 to perform functions associated with instruction sets for cache processor (e.g., of tiered memory devices).

In one or more examples, cache processor 140 may execute one or more commands of a programmable cache instruct set. In some cases, cache processor 140 may receive memory requests (e.g., write request, read request) from a memory controller (e.g., a memory controller that receives commands from a host, an application of the host, etc.) and process the memory requests based on the programmable cache instruct set. In some cases, cache processor 140 may modify one or more aspects of a cache algorithm based on executing a command from the instruction set. For example, cache processor 140 may replace a first eviction policy with a second eviction policy based on the workload characteristics of an application (e.g., an application generating the memory requests).

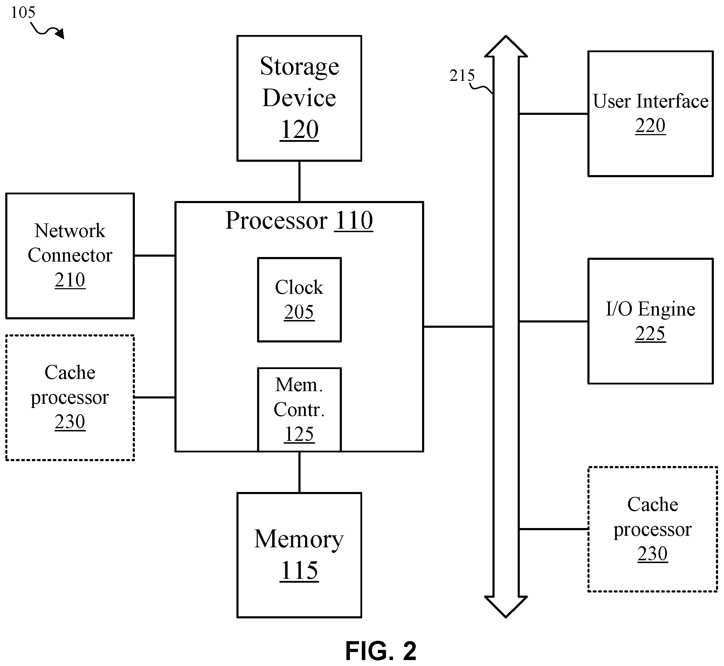

**FIG.** 2 illustrates details of machine 105 of FIG. 1, according to examples described herein. In the illustrated example, machine 105 may include processor 110. Processor 110 may include one or more processors and/or one or more dies. Processor 110 may include memory controller 125 (e.g., one or more memory controllers) and clock 205 (e.g. one or more clocks), which may be used to coordinate the operations of the components of the machine. Processor 110 may be coupled to memory 115 (e.g., one or more memory chips, stacked memory, etc.), which may include random access memory (RAM), read-only memory (ROM), or other state preserving media, as examples. Processor 110 may be coupled to storage device 120 (e.g., one or more storage devices), and to network connector 210, which may be, for example, an Ethernet connector or a wireless connector. Processor 110 may be connected to bus 215 (e.g., one or more buses), to which may be attached user interface 220 (e.g., one or more user interfaces) and Input/Output (I/O) interface ports that may be managed using I/O engine 225 (e.g., one or more I/O engines), among other components. As shown, processor 110 may be coupled to cache processor 230, which may be an example of cache processor 140 of FIG. 1. Additionally, or alternatively, processor 110 may be connected to bus 215, to which may be attached cache processor 230.

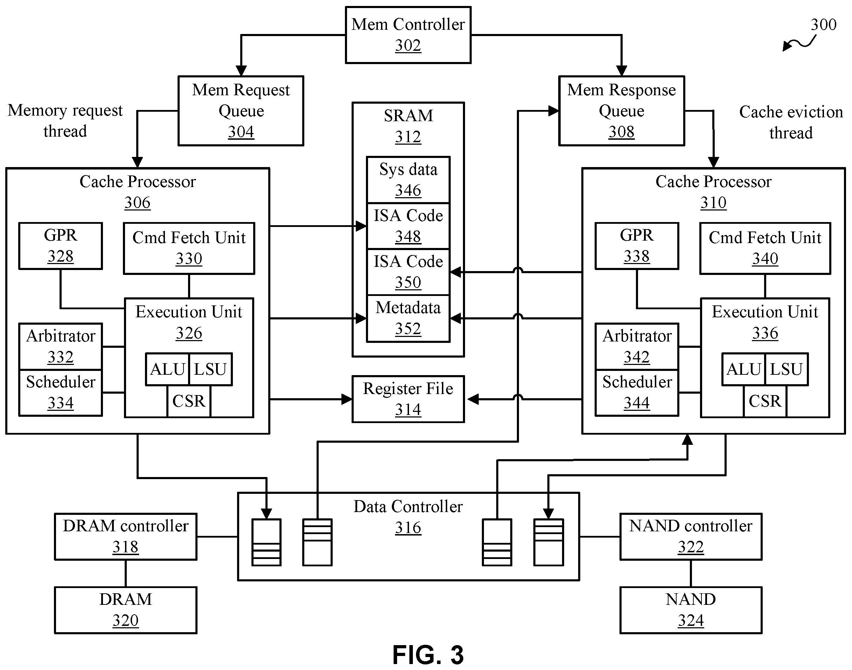

**FIG.** 3 illustrates an example system 300 in accordance with one or more implementations as described herein. In some configurations, one or more aspects of system 300 may be implemented by or in conjunction with cache processor 140 of FIG. 1 and/or cache processor 230 of FIG. 2. In some configurations, one or more aspects of system 300 may be implemented by or in conjunction with machine 105, components of machine 105, or any combination thereof.

In the illustrated example, system 300 may include memory controller 302 (e.g., CXL memory controller), memory response queue 304, cache processor 306, memory response queue 308, cache processor 310, SRAM 312 (e.g., a shared memory), register file 314, data controller 316, DRAM controller 318, DRAM 320, NAND controller 322, and NAND 324. As shown, SRAM 312 may include system data 346, ISA code 348, ISA code 350, and metadata 352. The systems and methods described enable a user to program cache algorithms based on cache processor instruction sets. The cache algorithms (e.g., custom cache algorithms) can be downloaded to device memory (e.g., device command memory, memory request queue 304, memory on cache processor 306, memory on cache processor 310, SRAM 312, DRAM 320, NAND 324, etc.). In some cases, device memory can store user programmed scripts based on the cache instruction sets described herein.

In some examples, a given system may include one or more processors. For example, system 300 may include at least one CPU and/or at least one GPU. The at least one CPU and/or at least one GPU may be in addition to cache processor 306 and/or in addition to cache processor 310. Accordingly, cache processor 306 and/or cache processor 310 may offload one or more processes from a CPU and/or GPU of a given system (e.g., system 300). For example, cache processor 306 and/or cache processor 310 may offload one or more cache operations (e.g., processing write requests associated with a cache, processing read requests associated with a cache, programming a cache, configuring a cache, programming one or more cache algorithms, etc.). In some cases, the systems and methods described herein may enable cache algorithms to be modifiable and/or reconfigurable during runtime based at least on cache instruction sets executed by cache processor 306 and/or cache processor 310.

With some systems, fixed cache algorithms for DRAM cache restrict the algorithm to some default setting, which limits the applicability to some applications. Some application may perform poorly based on the lack of flexibility with fixed DRAM cache, optimized to the workload of their application. System 300 enables a programmable cache algorithm that may be based on a set of instructions or rules that manage a cache of information associated with a computer program. System 300, and the associated methods described herein, enable a user to customize cache algorithms for a given application. Programmable cache algorithms (e.g., eviction/replacement policy) can improve system performance by storing frequently used data in faster memory locations more efficiently. When a cache is full, the cache algorithm can select which data items to remove to make room for new data. Based on the systems and methods described herein, a cache algorithm may be configured for the workloads and characteristics of a given application, improving the cache efficiency associated with execution of that application.

In some examples, memory controller 302 may depict a CXL memory controller. In some cases, system 300 may depict at least a portion of a tiered memory device (e.g., CXL tiered memory device). CXL tiered memory devices may operate based on device cache. In some cases, the cache may include device DRAM cache (e.g., DRAM 320). CXL DRAM cache may be part of the compute express link (CXL) technology, which may be based on peripheral component interconnect express (PCIe). CXL DRAM cache can be based on a cache-coherent interconnect protocol that allows processors to communicate with memory expanders and accelerators. The cache may be configured to help mask the latency associated with accessing relatively slow media (e.g., NAND 324). Based on the systems and methods described herein, performance of DRAM cache such as DRAM 320 can be related to workload characterization, cache parameters, cache eviction algorithms, etc.

As shown, memory controller 302 may connect to one or more queues. For example, memory controller 302 may connect to memory request queue 304 and/or memory response queue 304. In some examples, memory controller 302 may be communicatively coupled to a host (e.g., machine 105, operating system, application of a host, etc.). In some cases, the host may issue a memory request (e.g., read request, write request) to memory controller 302. Memory controller 302 may add a memory request received from the host to memory request queue 304. Thus, memory request queue 304 may hold one or more memory requests from memory controller 302. In conjunction with data controller 316, cache processor 306 may process the memory requests in memory request queue 304 and provide responses for processed requests to memory response queue 308. Examples of memory responses provided to memory response queue 308 may include request complete, request canceled, error code for errors encountered, information related to exception handling, data from a processed read request, etc. Memory request queue 304 and/or memory response queue 308 may include a first in first out (FIFO) queue, a last in first out (LIFO) queue, or a first in last out (FILO) queue, and/or some other queue.

System 300 may include one or more processor cores dedicated to managing device cache (e.g., DRAM 320) based on instruction sets that enable programmable cache algorithms (e.g., cache algorithms modifiable during runtime based on execution of the instruction sets). In some cases, system 300 may include at least one request cache processor (e.g., cache processor 306) configured to process memory requests. Additionally, or alternatively, system 300 may include at least one eviction cache processor (e.g., cache processor 310) configured to process eviction routines (e.g., implementing replacement / eviction policies, evicting items from DRAM 320, etc.).

In the illustrated example, cache processor 305 and cache processor 310 include at least one execution unit, at least one GPR, at least one command fetch unit, at least one arbitrator, at least one scheduler, etc. As shown, cache processor 306 may include execution unit 326, general purpose register (GPR) 328, command fetch unit 330, arbitrator 332, and scheduler 334. In some cases, execution unit 326 may include an algorithm logic unit (ALU), a load store unit (LSU), and at least one control and status register (CSR). Cache processor 310 may include execution unit 336, GPR 338, command fetch unit 340, arbitrator 342, scheduler 344. In some cases, execution unit 326 may include an ALU, an LSU, and at least one CSR.

GPR 328 and/or GPR 338 may include control registers that hold control data, control messages; status registers that hold information regarding the status of a device, status of a cache, status of a component, etc., interrupt registers to hold information associated with an interrupt or exception, etc. Command fetch unit 330 and/or command fetch unit 340 may fetch a cache command from command memory (e.g., memory request queue 304) for processing by execution unit 326 of cache processor 306. Arbitrator 332 may arbitrate between processes to determine what processes cache processor 306 executes; arbitrator 342 may arbitrate between processes to determine what processes cache processor 310 executes. Scheduler 334 and/or scheduler 334 may prepare data in a register (e.g., GPR 328, GPR 338, CSR of a cache processor, register file 314, etc.) and schedule execution of a cache instruction by a given execution unit. Execution unit 326 and/or execution unit 336 may execute cache instructions described herein. In some cases, execution unit 326 and/or execution unit 336 may include ARM or RISC processors configured for processing cache instruction sets described herein. As shown, execution unit 326 may be associated with processing a memory request thread and execution unit 326 may be associated with processing a cache eviction thread. Execution unit 326 may execute the memory request thread and execution unit 336 may execute the cache eviction thread in parallel.

SRAM 312 may be configured as a memory that is shared (e.g., shared memory) between cache processor 306 and cache processor 310. System data 346 may store a cache context for DRAM 320 configured as a cache for system 300. System data 346 may store a collection of temporary files created by system 300, which may include system log files, temporary data used to speed up cache system operations, storing frequently accessed information, etc. ISA code 348 may store data, commands, cache instruction sets, etc., associated with cache processor 306 executing a memory request thread. ISA code 350 may store data, commands, cache instruction sets, etc., associated with cache processor 310 executing a cache eviction thread. Metadata 352 may store information associated with data cached in DRAM 320 (e.g., block address, tag, index, block offset, etc.)

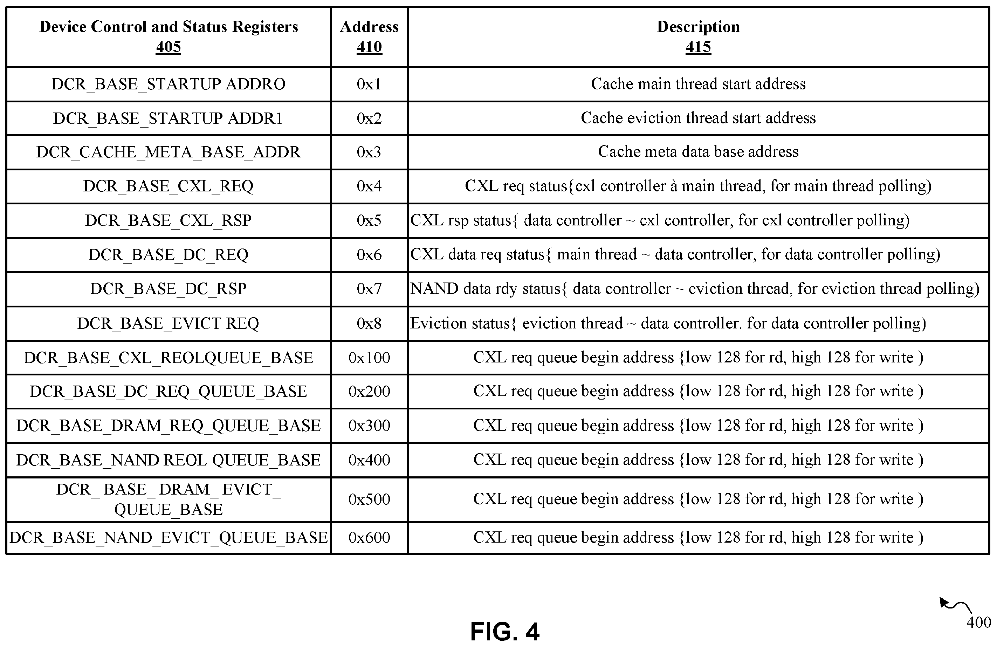

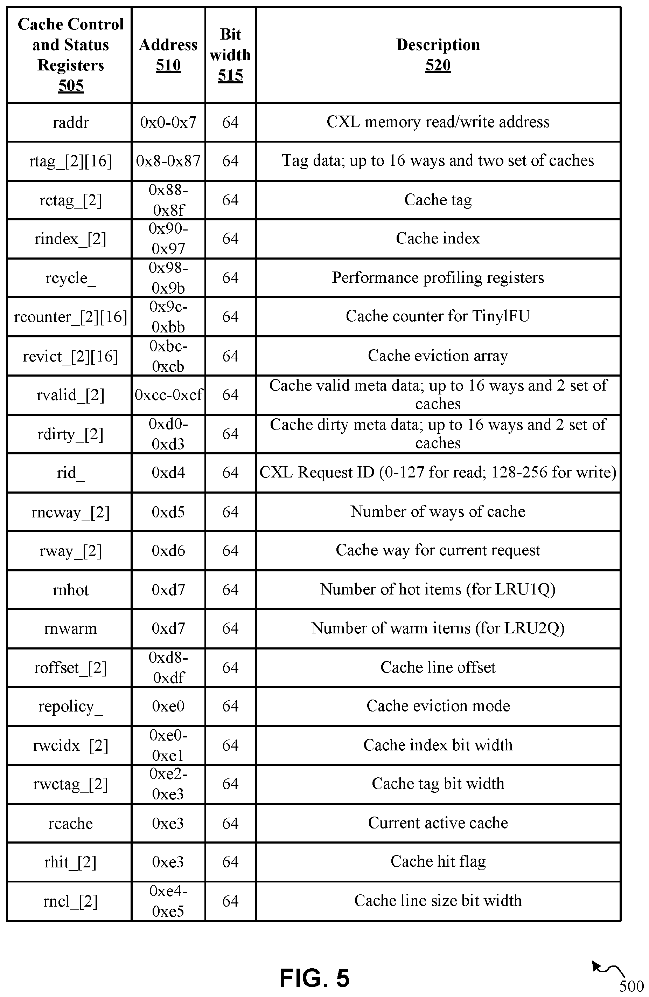

In some cases, register file 314 can include a device control status register and/or cache control status register. For example, register file 314 can include at least one device control status register and/or at least one cache control status register associated with cache instruction sets described herein, which enable programming cache algorithms associated with cache processor 306 executing a memory request thread and/or cache processor 310 executing a cache eviction thread. Additional information regarding device control status registers and cache control status registers can be found in FIGs. 4 and 5 and accompanying description.

Data controller 316 may control read/write access to DRAM 320 via DRAM controller 318 and/or to NAND 324 via NAND controller 322. Data of system 300 may generally be stored in NAND 324 (e.g., relatively cheap data storage with sufficient latency). Data that is accessed relatively frequently may be cached in DRAM 320 (e.g., for relatively low latency, high throughput). Data controller 316 may determine whether a read/write request is for DRAM 320 or NAND 324 (e.g., cache hit read/write for DRAM 320; cache miss read/write for NAND 324). Data controller 316 may include one or more queues (e.g., DRAM request queue and DRAM response queue for DRAM 320; NAND request queue and NAND response queue for NAND 324). Queues of data controller 316 may include FIFOs, LIFOs, FILOs, and/or some other type of queues.

As shown, cache processor 306 may connect to one or more queues of data controller 316 (e.g., DRAM request queue, DRAM response queue). Cache processor 310 may perform one or more commands from the cache instruction set described herein to execute a memory request thread. Processing a memory request thread may include cache processor 306 processing memory requests fetched from memory request queue 304. In some cases, cache processor 306 may send read/write requests to data controller 316 (e.g., via a DRAM request queue) for reads/writes to DRAM 320 and/or NAND 324. Cache processor 306 may determine whether data associated with a memory request is hot data, warm data, cold data based on data access frequency. Based on the cache algorithms being implemented, cache processor 306 may store hot data (e.g., data accessed frequently) in DRAM 320; warm data (e.g., data accessed frequently, but less frequently than hot data) in DRAM 320 or NAND 324; and cold data (e.g., data accessed infrequently) in NAND 324.

Cache processor 306 may determine whether data associated with a memory request is in DRAM 320 (e.g., cache hit) or not in DRAM 320 (e.g., cache miss). With a cache hit, cache processor 306 may read the data from DRAM 320 for a read request, or write data to DRAM 320 for a write request (e.g., modify data already in DRAM 320 based on the write request). In some cases, cache processor 306 may access a storage device (e.g., NAND 324) to process a memory request based on the cache processor 306 determining a state of the data associated with the memory request in relation to the cache and the storage device (e.g., cache miss based on the data being stored in the storage device and not in the cache). With a cache miss, cache processor 306 may read the data from NAND 324 for a read request, or write data to NAND 324 for a write request (e.g., modify data in NAND 324 based on the write request). In some cases, cache processor 310 may receive a request from data controller 316 (e.g., via a NAND memory request queue of data controller 316) based on the cache miss. Cache processor 310 may perform a cache eviction routine based on a request that cache processor 310 receives from data controller 316.

As shown, cache processor 310 may connect to one or more queues of data controller 316 (e.g., receive requests from NAND request queue, send responses from NAND response queue). Cache processor 310 may perform one or more commands from the cache instruction set described herein to execute a cache eviction thread. Processing a cache eviction thread may include cache processor 310 processing memory requests fetched from a NAND request queue of data controller 316. Based on receiving a request, cache processor 310 may execute an eviction action. For example, cache processor 310 may determine to maintain data in DRAM 320 or add data to DRAM 320. In some cases (e.g., based on a cache miss), cache processor 310 may evict data from DRAM 320 when there is data to add to DRAM 320 and DRAM 320 is full. In some cases, cache processor 310 may send a command to data controller 316 to implement the eviction action (e.g., remove, read, write data to DRAM 320 or NAND 324).

With a cache hit, cache processor 306 may execute one or more commands from the cache instruction set described herein. For example, cache processor 306 may receive a read/write request from memory request queue 304, read metadata 352, and perform a tag check (e.g., tag load and tag compare) to get a cache hit status for the data associated with the read/write request. Cache processor 306 may send a read/write request to data controller (e.g., to read/write data from/to DRAM 320) to read/write data associated with the memory request. When data is evicted, cache processor 306 or cache processor 310 may update an eviction status of the data (e.g., dirty status). Cache processor 306 may return to an entry point of the cache request routine for processing a next request. Data controller 316 may issue a response (e.g., to memory response queue 308) indicating a status of the memory request (e.g., request is completed).

With a cache miss, cache processor 306 may execute one or more commands from the cache instruction set described herein. For example, cache processor 306 may send a memory request to data controller 316 to read data from or write data to NAND 324. When data controller 316 receives a response from DRAM controller 318 (e.g., memory request performed), data controller 316 may send a completion signal to memory response queue 308. Memory controller 302 may provide the response to the host.

With an eviction routine (e.g., cache processor 310 determines whether to evict data from DRAM 320), cache processor 306 and/or cache processor 310 may execute one or more commands from the cache instruction set described herein. When DRAM 320 is not full (e.g., cache space available), cache processor 310 may write the data associated with the memory request to DRAM 320. However, when DRAM 320 is full, then cache processor 310 may remove some of the data in DRAM 320 based on the cache algorithm implemented for that application (LRU, tiny LFU, etc.). Old data (e.g., least recently used data) may be removed from DRAM 320, and the new data of the memory request may be added to cache. In some cases, the old data may be dirty. Dirty data in the context of a cache can refer to data that has been modified within the cache memory, but which has not yet been written back to the main memory (e.g., DRAM 320 holds an updated version of the data that is not reflected in the original source of the data in NAND 324). Accordingly, when the old data being evicted is dirty, then cache processor 310 may read the old data being evicted from DRAM 320 and request data controller 316 to write the evicted data to NAND 324. When the old data is not dirty (e.g., the old data in cache does not differ from the original source of the old data in NAND), then the old data may be removed from DRAM 320 (e.g., without reading the old data from cache, without writing the old data to the NAND).

**FIG. 4** illustrates an example data structure 400 in accordance with one or more implementations as described herein. In some configurations, one or more aspects of data structure 400 may be implemented by or in conjunction with cache processor 140 of FIG. 1 and/or cache processor 230 of FIG. 2. In some configurations, one or more aspects of data structure 400 may be implemented by or in conjunction with machine 105, components of machine 105, or any combination thereof.

In the illustrated example, data structure 400 depicts a configuration associated with one or more device control and status register (CSR). Data structure 400 may enable a user to program cache algorithms based on cache processor instruction sets described herein, allowing the user to adapt cache algorithms for the workload characteristics of a given application. Thus, data structure 400 may enable a fully programmable ISAs that enable various user programmable cache algorithms that are configured according to application constraints (e.g., processing constraints, memory bandwidth constraints, network bandwidth constraints, etc.). Device CSRs may handle control and status of a device associated with cache operations described herein (e.g., machine 105, system 300, etc.). The control and status information in the device CSRs described herein may be programmable by a user (e.g., customized to a workload of a given application).

As shown, data structure 400 may include device CSRs 405, address 410 (e.g., base address) associated with a given device CSR, and description of a given device CSR. Device CSRs 405 may include a device CSR for a memory request thread start address; a device CSR for a cache eviction thread start address; a device CSR for a cache metadata base address; a device CSR for a CXL request status (e.g., CXL controller → memory request thread, for memory request thread polling); a device CSR for a CXL response status (e.g., data controller → CXL controller, for CXL controller polling); a device CSR for a CXL data request status (e.g., memory request thread → data controller, for data controller polling); a device CSR for a NAND data ready status (e.g., data controller → eviction thread, for eviction thread polling); a device CSR for an eviction status (e.g., eviction thread → data controller, for data controller polling); a device CSR for a CXL request queue start address (e.g., low 128 bits for read, high 128 bits for write); a device CSR for a CXL response queue start address (e.g., low 128 bits for read, high 128 bits for write); a device CSR for a DRAM request queue start address (e.g., low 128 bits for read, high 128 bits for write); a device CSR for a DRAM response queue start address (e.g., low 128 bits for read, high 128 bits for write); a device CSR for a NAND request queue start address (e.g., low 128 bits for read, high 128 bits for write); and/or a device CSR for a NAND response queue start address (e.g., low 128 bits for read, high 128 bits for write).

**FIG. 5** illustrates an example data structure 500 in accordance with one or more implementations as described herein. In some configurations, one or more aspects of data structure 500 may be implemented by or in conjunction with cache processor 140 of FIG. 1 and/or cache processor 230 of FIG. 2. In some configurations, one or more aspects of data structure 500 may be implemented by or in conjunction with machine 105, components of machine 105, or any combination thereof.

In the illustrated example, data structure 500 depicts a configuration associated with one or more cache control and status register (CSR). Data structure 500 may enable a user to program cache algorithms based on cache processor instruction sets described herein, allowing the user to adapt cache algorithms for the workload characteristics of a given application. Thus, data structure 500 may enable a fully programmable ISAs that enable various user programmable cache algorithms that are configured according to application constraints (e.g., processing constraints, memory bandwidth constraints, network bandwidth constraints, etc.). Cache CSRs may handle control and status of cache operations described herein, including status of data in cache (e.g., data in DRAM 320), status of cache (e.g., status of DRAM 320; cache is full, cache has space for additional data, etc.). The control and status information in the cache CSRs described herein may be programmable by a user (e.g., customized to a workload of a given application).

As shown, data structure 500 may include cache CSRs 505, address 510 (e.g., base address) associated with a given cache CSR, and description of a given cache CSR. Device CSRs 505 may include a cache CSR for a CXL memory read/write address (e.g., address of data associated with a memory request); a cache CSR for tag data (e.g., up to 16 ways and 2 set of caches); a cache CSR for cache tags; a cache CSR for a cache index; a cache CSR for a performance profiling registers; a cache CSR for a cache counter (e.g., for tinyLFU cache algorithms); a cache CSR for a cache eviction array; a cache CSR for cache valid metadata (e.g., up to 16 ways and 2 set of caches); a cache CSR for a cache dirty metadata (e.g., up to 16 ways and 2 set of caches); a cache CSR for a CXL request ID (e.g., 0-127 bits, or low 128 bits, for read and 128-256 bits, or high 128 bits, for write); and/or a cache CSR for the number of ways of cache.

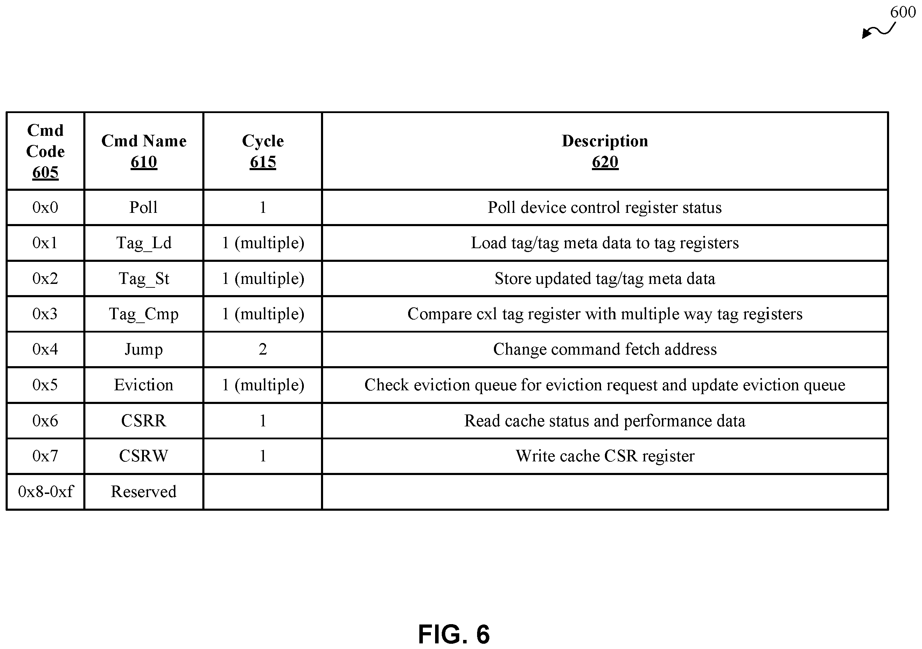

**FIG.** 6 illustrates an example data structure 600 in accordance with one or more implementations as described herein. In some configurations, one or more aspects of data structure 600 may be implemented by or in conjunction with cache processor 140 of FIG. 1 and/or cache processor 230 of FIG. 2. In some configurations, one or more aspects of data structure 600 may be implemented by or in conjunction with machine 105, components of machine 105, or any combination thereof.

In the illustrated example, data structure 600 depicts commands associated with the systems and methods of programmable cache algorithms described herein. Data structure 600 may enable a user to program cache algorithms based on cache processor instruction sets described herein, allowing the user to adapt cache algorithms for the workload characteristics of a given application. Thus, data structure 600 may enable a fully programmable ISAs that enable various user programmable cache algorithms that are configured according to application constraints (e.g., processing constraints, memory bandwidth constraints, network bandwidth constraints, etc.).

As shown, data structure 600 may include command code 605, command name 610, cycle 615, and description 620. Commands of data structure 600 may include a poll command to poll CSRs (e.g., device CSRs of FIG. 4, cache CSRs of FIG. 5); a tag load command to load a tag/tag metadata to a tag register (e.g., load multiple tags/tag metadata to tag registers). In some cases, the tag registers may be stored in a tag register region of DRAM 320, SRAM 312, registers of cache processor 306, registers of cache processor 310, register file 314, etc. Commands of data structure 600 may include a tag store command to store an updated tag/tag metadata; a tag compare command to compare a CXL tag (e.g., contents of a tag register of a memory request) with one or more cache tags (e.g., contents of one or more tag registers of data stored in cache; data cached in DRAM 320); a jump compare command to change or jump to a command fetch address; an eviction command to check an eviction queue for an eviction request (e.g., a request queue of data controller 316) and/or update the eviction queue; a CSR read command to read a cache CSR (e.g., read a cache CSR of FIG. 5; read cache status; read performance data); and/or a CSR read command to write to a cache CSR (e.g., write a cache CSR of FIG. 5; write cache status; write performance data).

As shown, a poll command may take 1 clock cycle to perform (e.g., one clock cycle of a cache processor); a tag load command may take 1 or more clock cycle (e.g., at least 1 clock cycle per tag; one or more clock cycles per multiple tag loads); a tag store command may take 1 or more clock cycle (e.g., at least 1 clock cycle per tag; one or more clock cycles per multiple tag stores); a tag compare command may take 1 or more clock cycle (e.g., at least 1 clock cycle per tag; one or more clock cycles per multiple tag compare); a jump command may take at least 2 clock cycles; an eviction command may take one or more clock cycles; a CSR read command may take 1 clock cycle; and a CSR write command may take 1 clock cycle.

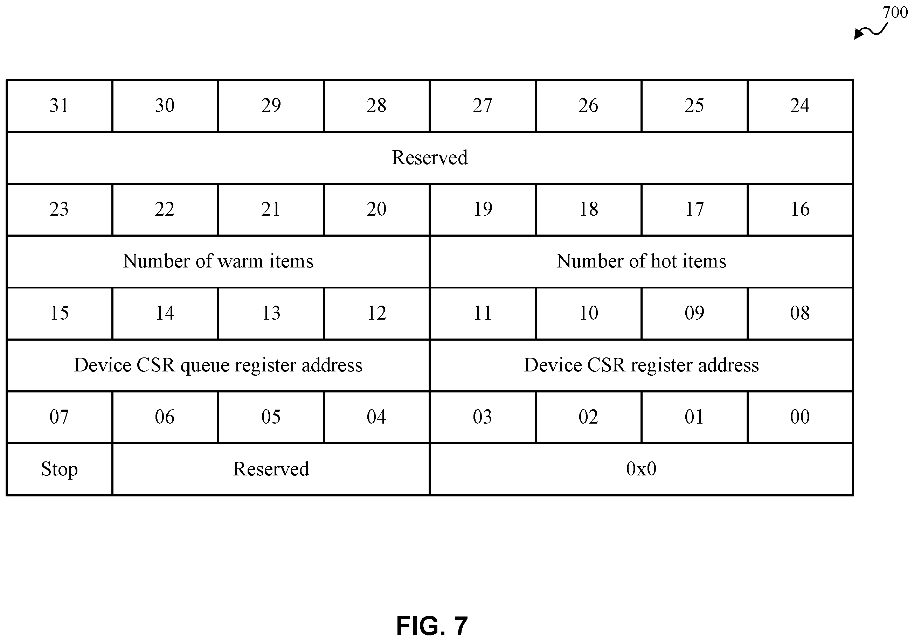

FIG. 7 illustrates an example command 700 in accordance with one or more implementations as described herein. In some configurations, one or more aspects of command 700 may be implemented by or in conjunction with cache processor 140 of FIG. 1 and/or cache processor 230 of FIG. 2. In some configurations, one or more aspects of data structure 600 may be implemented by or in conjunction with machine 105, components of machine 105, or any combination thereof.

In the illustrated example, command 700 depicts a format associated with a command of the cache instruction set described herein. Command 700 may be part of a cache instruction set that enables a user to program cache algorithms, allowing the user to adapt cache algorithms for the workload characteristics of a given application. Thus, command 700 may enable a fully programmable ISAs that enable various user programmable cache algorithms that are configured according to application constraints (e.g., processing constraints, memory bandwidth constraints, network bandwidth constraints, etc.).

Command 700 may depict a format associated with a poll command of the cache instruction set described herein. In the illustrated example, bits 31:24 may be reserved; bits 23:20 may indicate a number of items in a warm queue; bits 19:16 may indicates a number of items in a hot queue; bits 15:12 may indicate a device CSR queue address (e.g., LRU cache, indicates how many items in a queue); bits 11:8 may indicate a device CSR address (e.g., a request for a device CSR address); bit 7 may indicate a stop setting (e.g., binary 1 indicates stop execution of a cache processor or stop current command, while binary 0 indicates no stop; or vice versa); bits 4-6 may be reserved; and bits 3:0 may indicate the command code for a poll command.

A cache processor (e.g., cache processor 306, cache processor 310) may execute a poll command such as command 700 to poll requests from a memory request queue (e.g., memory request queue 304). Poll commands such as command 700 may provide an interface between a memory controller and a request cache processor (e.g., memory controller 302 and cache processor 306). A cache processor may execute a poll command such as command 700 to poll a device CSR (e.g., device CSR of FIG. 4) to verify whether a request ID is valid (e.g., request ID of memory controller 302, request ID of data controller 316). A cache processor may execute a poll command, such as command 700, to copy a request address and ID from a device CSR queue register (e.g., to address and ID registers) when a request status is ready. The address of device CSR queue register may be the combination of a queue base address and the ID from a polled register.

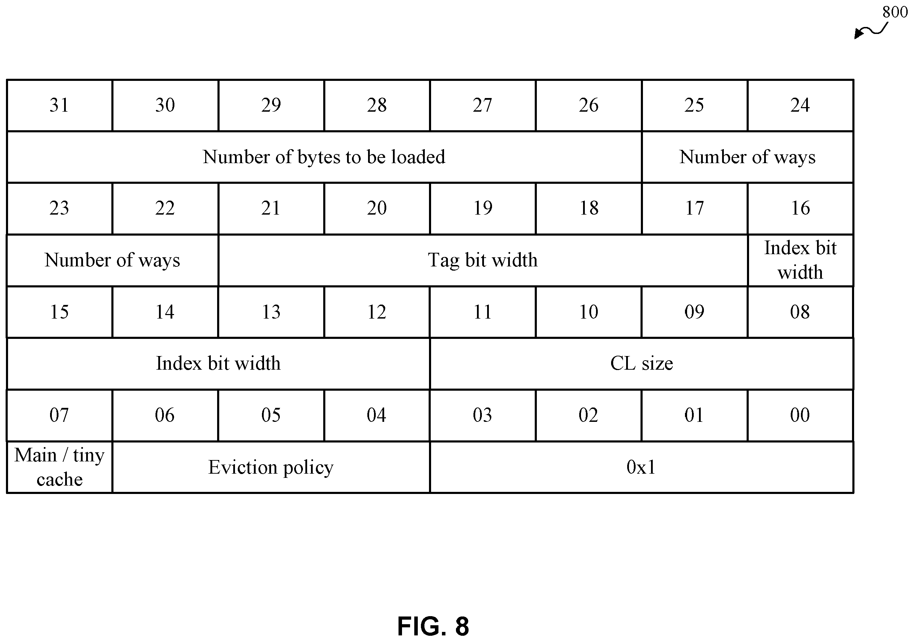

**FIG. 8** illustrates an example command 800 in accordance with one or more implementations as described herein. In some configurations, one or more aspects of command 800 may be implemented by or in conjunction with cache processor 140 of FIG. 1 and/or cache processor 230 of FIG. 2. In some configurations, one or more aspects of data structure 600 may be implemented by or in conjunction with machine 105, components of machine 105, or any combination thereof.

In the illustrated example, command 800 depicts a format associated with a command of the cache instruction set described herein. Command 800 may be part of a cache instruction set that enables a user to program cache algorithms, allowing the user to adapt cache algorithms for the workload characteristics of a given application. Thus, command 800 may enable a fully programmable ISAs that enable various user programmable cache algorithms that are configured according to application constraints (e.g., processing constraints, memory bandwidth constraints, network bandwidth constraints, etc.).

Command 800 may depict a format associated with a tag load command of the cache instruction set described herein. In the illustrated example, bits 31:26 may indicate a number of bytes to be loaded (e.g., for a tag load command); bits 25:22 may indicate the number of ways configured for a given cache (e.g., DRAM 320); bits 21:17 may indicate the bit width of a tag of an item in cache; bits 16:12 may indicate the bit width of an index of an item in cache; bits 11:8 may indicate a cacheline size of the cache (e.g., a fixed block of memory transferred to a cache at a time). In some examples, binary 0 indicates 64 bytes; binary 1 indicates 128 bytes; binary 2 indicates 256 bytes; binary 3 indicates 384 bytes; binary 4 indicates 512 bytes; binary 5 indicates 640 bytes; binary 5 indicates 768 bytes; binary 6 indicates 896 bytes; binary 7 indicates 1024 bytes; binary 8 indicates 1152 bytes; binary 9 indicates 1280 bytes; binary 10 indicates 1408 bytes; binary 11 indicates 1536 bytes; binary 12 indicates 1664 bytes; binary 13 indicates 1792 bytes; binary 14 indicates 1920 bytes; and binary 15 indicates 2048 bytes. In the illustrated example, bit 7 may indicate main or tiny cache (e.g., binary 0 indicates main cache metadata, binary 1 indicates tiny cache metadata; or vice versa); bits 6:4 may indicate an eviction policy (e.g., eviction policy and/or replacement policy; binary 0 may indicate LRU, binary 1 may indicate LRU2Q, binary 2 may indicate tiny LFU, etc.); and bits 3:0 may indicate the opcode for a tag load command. According to the illustrated example, the eviction policy indicated in command 800, or any command described herein, may indicate up to eight eviction policies (e.g., based on three bits of eviction policy field). Possible eviction policies indicated in a given command may include at least one of: least recently used (LRU), LRU2Q, least frequently used (LFU), tiny LFU, first in first out (FIFO), random replacement (RR), most recently used (MRU), and time to live (TTL), etc.

A cache processor (e.g., cache processor 306, cache processor 310) may execute a tag load command such as command 800 to monitor the status of a cache (e.g., DRAM 320) and/or the data in the cache. A cache processor may execute a tag load command, such as command 800, to determine whether a memory request is a cache hit or a cache miss. A cache processor may execute a tag load command, such as command 800, to load a tag and/or tag metadata from a memory (e.g., from SRAM 312, from metadata 352) to a tag register. The tag data may include the tag value, a valid indicator (e.g., indicates data in cache for that tag is valid), a dirty indicator (e.g., indicates data in cache for that tag is dirty), eviction array indicator (e.g., indicates data in cache for that tag is in an eviction array, marked for eviction). A memory address associated with a tag may be based on any combination of a device CSR cache metadata address, an eviction policy, an index associated with the tag, and/or CXL memory read/write address. A cache data tag can include a field associated with data in a cache. The tag can identify a cache line and its location in main memory. The tag can be part of a cache address that includes the tag, an index, and/or an offset. A cache can hold multiple items of data. Each item may be associated with its own tag.

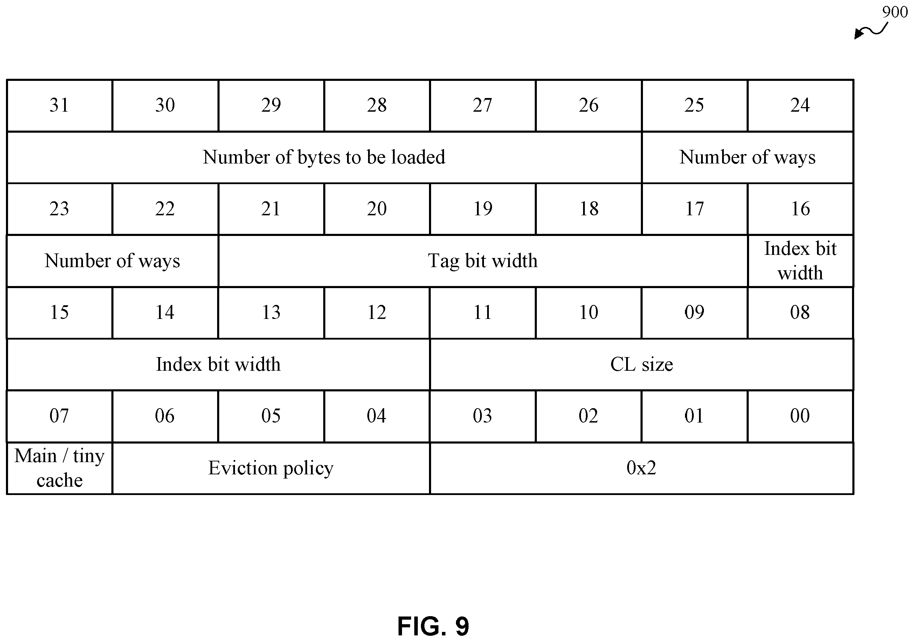

**FIG.** 9 illustrates an example command 900 in accordance with one or more implementations as described herein. In some configurations, one or more aspects of command 900 may be implemented by or in conjunction with cache processor 140 of FIG. 1 and/or cache processor 230 of FIG. 2. In some configurations, one or more aspects of data structure 600 may be implemented by or in conjunction with machine 105, components of machine 105, or any combination thereof.

In the illustrated example, command 900 depicts a format associated with a command of the cache instruction set described herein. Command 900 may be part of a cache instruction set that enables a user to program cache algorithms, allowing the user to adapt cache algorithms for the workload characteristics of a given application. Thus, command 900 may enable a fully programmable ISAs that enable various user programmable cache algorithms that are configured according to application constraints (e.g., processing constraints, memory bandwidth constraints, network bandwidth constraints, etc.).

Command 900 may depict a format associated with a tag store command of the cache instruction set described herein. In the illustrated example, bits 31:26 may indicate a number of bytes to be stored (e.g., for a tag store command); bits 25:22 may indicate the number of ways configured for a given cache (e.g., DRAM 320); bits 21:17 may indicate the bit width of a tag of an item in cache; bits 16:12 may indicate the bit width of an index of an item in cache; bits 11:8 may indicate a cacheline size of the cache (e.g., a fixed block of memory transferred to a cache at a time; similar possible cacheline sizes to command 800). In the illustrated example, bit 7 may indicate main or tiny cache (e.g., binary 0 indicates main cache metadata, binary 1 indicates tiny cache metadata; or vice versa); bits 6:4 may indicate an eviction policy (e.g., eviction policy and/or replacement policy; binary 0 may indicate LRU, binary 1 may indicate LRU2Q, binary 2 may indicate tiny LFU, etc.); and bits 3:0 may indicate the opcode for a tag store command.

A cache processor may execute a tag store command such as command 900 to store a tag and/or tag metadata from a tag register to memory (e.g., to SRAM 312, to metadata 352). The tag data may include the tag value, a valid indicator (e.g., indicates data in cache for that tag is valid), a dirty indicator (e.g., indicates data in cache for that tag is dirty), eviction array indicator (e.g., indicates data in cache for that tag is in an eviction array, marked for eviction). A memory address associated with a tag may be based on any combination of a device CSR cache metadata address, an eviction policy, an index associated with the tag, and/or CXL memory read/write address. A cache processor may execute a tag store command, such as command 900, to store a new tag or store a tag that has been updated. When new data is written to cache, a new tag may be created and stored. When data in cache is accessed (e.g., read or write), a tag for that data may be updated and stored (e.g., loaded, updated, and stored). A tag may be updated to indicate access frequency (e.g., the data was recently accessed in cache), to update an address associated with the data in cache, to update a location of the data in cache, etc.

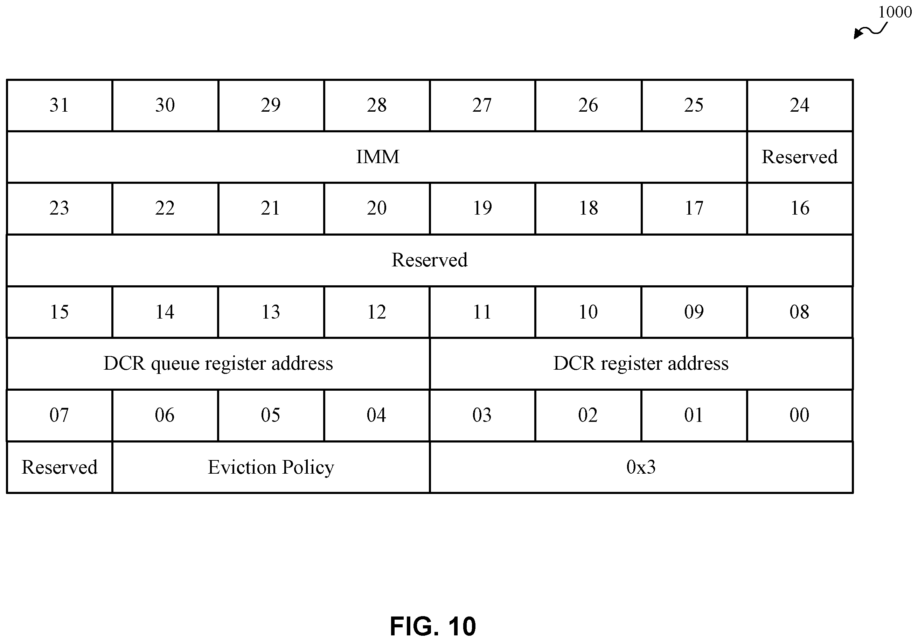

**FIG. 10** illustrates an example command 1000 in accordance with one or more implementations as described herein. In some configurations, one or more aspects of command 1000 may be implemented by or in conjunction with cache processor 140 of FIG. 1 and/or cache processor 230 of FIG. 2. In some configurations, one or more aspects of data structure 600 may be implemented by or in conjunction with machine 105, components of machine 105, or any combination thereof.

In the illustrated example, command 1000 depicts a format associated with a command of the cache instruction set described herein. Command 1000 may be part of a cache instruction set that enables a user to program cache algorithms, allowing the user to adapt cache algorithms for the workload characteristics of a given application. Thus, command 1000 may enable a fully programmable ISAs that enable various user programmable cache algorithms that are configured according to application constraints (e.g., processing constraints, memory bandwidth constraints, network bandwidth constraints, etc.).

Command 1000 may depict a format associated with a tag compare command of the cache instruction set described herein. In the illustrated example, bits 31:25 may indicate an immediate value (e.g., a memory address). An immediate value can refer to a constant value that is directly embedded within an instruction itself (e.g., in a tag compare command, in a jump command, etc.). Thus, the value is readily available without needing to be fetched from a register or memory location. In the illustrated example, bits 24:16 may be reserved; bits 15:12 may indicate a device CSR queue register address; bits 11:8 may indicate a device CSR address; bits 7 may be reserved; bits 6:4 may indicate an eviction policy (e.g., eviction policy and/or replacement policy; binary 0 may indicate LRU, binary 1 may indicate LRU2Q, binary 2 may indicate tiny LFU, etc.); and bits 3:0 may indicate the opcode for a tag compare command.

A cache processor may execute a tag compare command such as command 1000 to compare a CXL tag (e.g., a tag of data associated with a memory request) to one or more tags associated with data in a cache to determine whether there is a match (e.g., cache hit) or no match (e.g., cache miss).

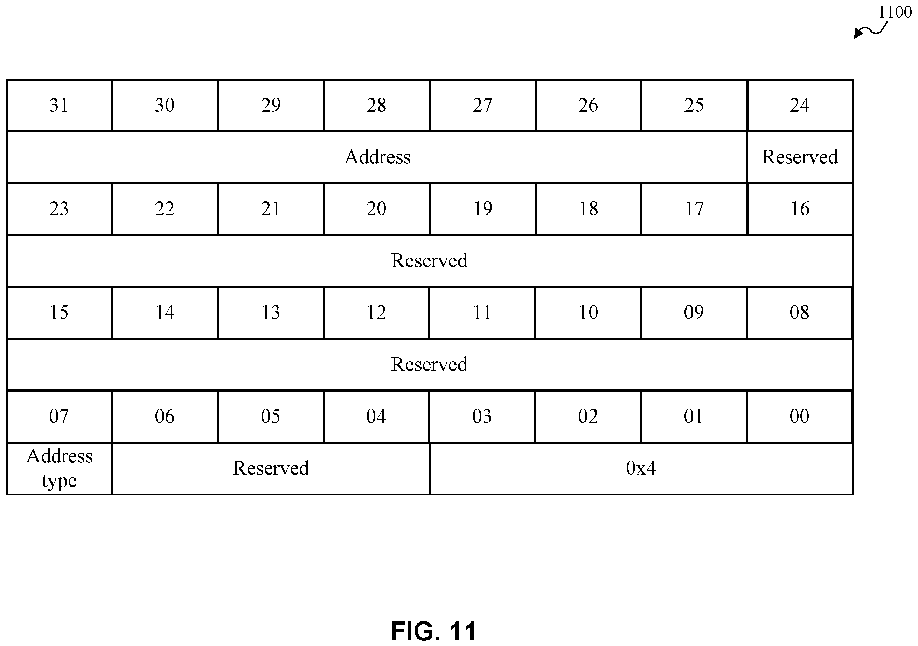

**FIG. 11** illustrates an example command 1100 in accordance with one or more implementations as described herein. In some configurations, one or more aspects of command 1100 may be implemented by or in conjunction with cache processor 140 of FIG. 1 and/or cache processor 230 of FIG. 2. In some configurations, one or more aspects of data structure 600 may be implemented by or in conjunction with machine 105, components of machine 105, or any combination thereof.

In the illustrated example, command 1100 depicts a format associated with a command of the cache instruction set described herein. Command 1100 may be part of a cache instruction set that enables a user to program cache algorithms, allowing the user to adapt cache algorithms for the workload characteristics of a given application. Thus, command 1100 may enable a fully programmable ISAs that enable various user programmable cache algorithms that are configured according to application constraints (e.g., processing constraints, memory bandwidth constraints, network bandwidth constraints, etc.).

Command 1100 may depict a format associated with a jump command of the cache instruction set described herein. A jump command may be used to alter the sequential flow of program execution by transferring control to a different part of code, which may include jumping to a new memory address specified within the jump command. The jump command may change where execution for a given memory request continues to run. For example, with a cache hit, the execution may continue the memory request routine. With a cache miss, the jump command may be executed to jump to a different address (e.g., jump to an address associated with initiating an eviction routine, etc.).

In the illustrated example, bits 31:25 may indicate a jump address (e.g., an address associated with a jump command, an address of where to jump to in a memory request routine or cache eviction routine); bits 24:8 may be reserved; bits 7: may indicate a jump address type (e.g., binary 0 may indicate a relative address, binary 1 may indicate an absolute address; or vice versa); bits 6:4 may be reserved; bits 3:0 may indicate the opcode of a jump command.

A cache processor may execute a jump command, such as command 1100, to jump to a specified location of code. A jump command such as command 1100 may include a relative address jump, where the target address is calculated relative to a current location (e.g., current program counter value, current instruction). With a relative jump address, the jump destination may be specified as an offset relative to the current instruction. Additionally, or alternatively, a jump command such as command 1100 may include an absolute address jump, where the jump instruction specifies the exact memory location (e.g., address) where the program execution should transfer to, using a fixed address value, rather than a relative offset or calculated address.

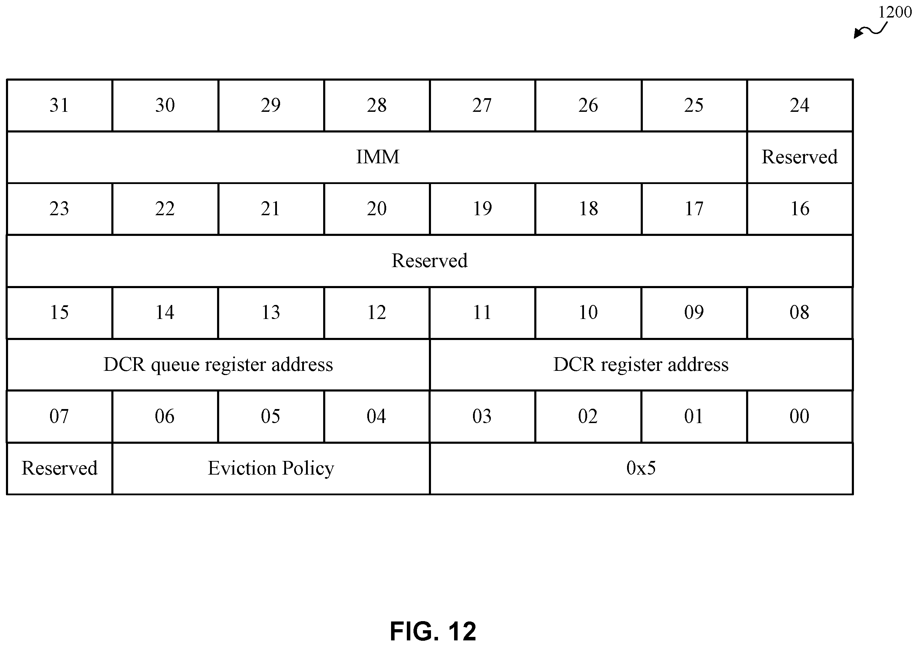

**FIG. 12** illustrates an example command 1200 in accordance with one or more implementations as described herein. In some configurations, one or more aspects of command 1200 may be implemented by or in conjunction with cache processor 140 of FIG. 1 and/or cache processor 230 of FIG. 2. In some configurations, one or more aspects of data structure 600 may be implemented by or in conjunction with machine 105, components of machine 105, or any combination thereof.

In the illustrated example, command 1200 depicts a format associated with a command of the cache instruction set described herein. Command 1200 may be part of a cache instruction set that enables a user to program cache algorithms, allowing the user to adapt cache algorithms for the workload characteristics of a given application. Thus, command 1200 may enable a fully programmable ISAs that enable various user programmable cache algorithms that are configured according to application constraints (e.g., processing constraints, memory bandwidth constraints, network bandwidth constraints, etc.).

Command 1200 may depict a format associated with an eviction command of the cache instruction set described herein. In the illustrated example, bits 31:25 may indicate an immediate value; bits 24:16 may be reserved; bits 15:12 may indicate a device CSR queue register address; bits 11:8 may indicate a device CSR address; bits 7 may be reserved; bits 6:4 may indicate an eviction policy (e.g., eviction policy and/or replacement policy; binary 0 may indicate LRU, binary 1 may indicate LRU2Q, binary 2 may indicate tiny LFU, etc.); and bits 3:0 may indicate the opcode for an eviction command.

A cache processor may execute an eviction command, such as command 1200, to perform one or more tasks of an eviction routine. Based on an instruction from data controller, a cache processor may execute an eviction command such as command 1200 to check a tag information, find eviction location, initialize an eviction routine, and/or perform an eviction of data from cache based on eviction policy (e.g., eviction policy indicated in command 1200).

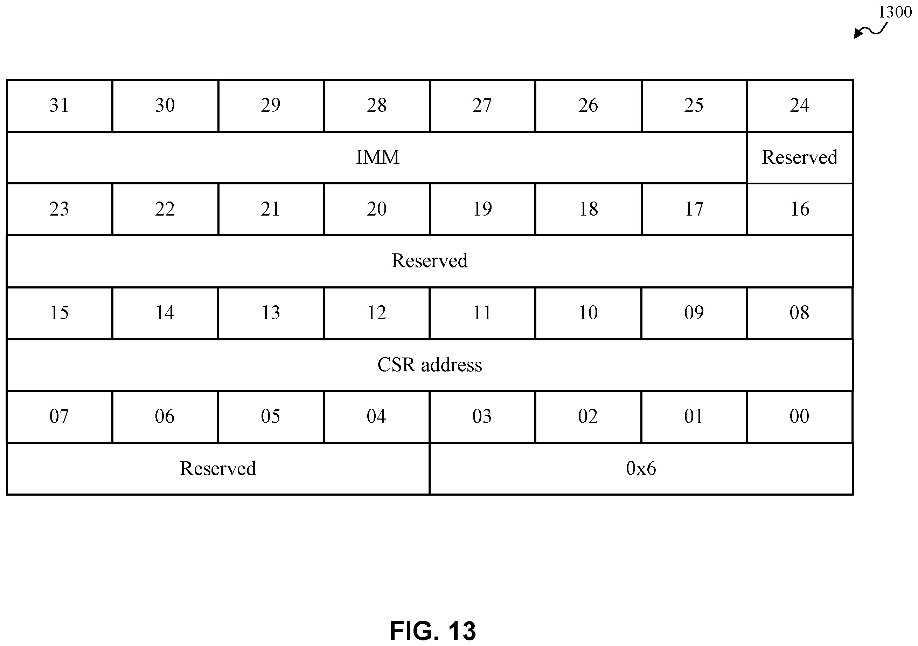

**FIG. 13** illustrates an example command 1300 in accordance with one or more implementations as described herein. In some configurations, one or more aspects of command 1300 may be implemented by or in conjunction with cache processor 140 of FIG. 1 and/or cache processor 230 of FIG. 2. In some configurations, one or more aspects of data structure 600 may be implemented by or in conjunction with machine 105, components of machine 105, or any combination thereof.

In the illustrated example, command 1300 depicts a format associated with a command of the cache instruction set described herein. Command 1300 may be part of a cache instruction set that enables a user to program cache algorithms, allowing the user to adapt cache algorithms for the workload characteristics of a given application. Thus, command 1300 may enable a fully programmable ISAs that enable various user programmable cache algorithms that are configured according to application constraints (e.g., processing constraints, memory bandwidth constraints, network bandwidth constraints, etc.).

Command 1300 may depict a format associated with a CSR read command of the cache instruction set described herein. In the illustrated example, bits 31:25 may indicate an immediate value (e.g., a memory address); bits 24:16 may be reserved; bits 15:8 may indicate a CSR address (e.g., address of a device CSR, address of a cache CSR); bits 7:4 may be reserved; bits 3:0 may indicate the opcode for a CSR read command.

A cache processor may execute a CSR read command, such as command 1300, to read a CSR register (e.g., at the indicated CSR address). A cache processor may execute a CSR read command, such as command 1300, to store data to memory (e.g., at a memory address indicated in the immediate value). A cache processor may execute a CSR read command, such as command 1300, to determine a status of the cache system (e.g., machine 105, system 300, etc.). A cache processor may execute a CSR read command, such as command 1300, to debug a cache operation (e.g., of a memory request routine, cache eviction routine) based on reading a CSR.

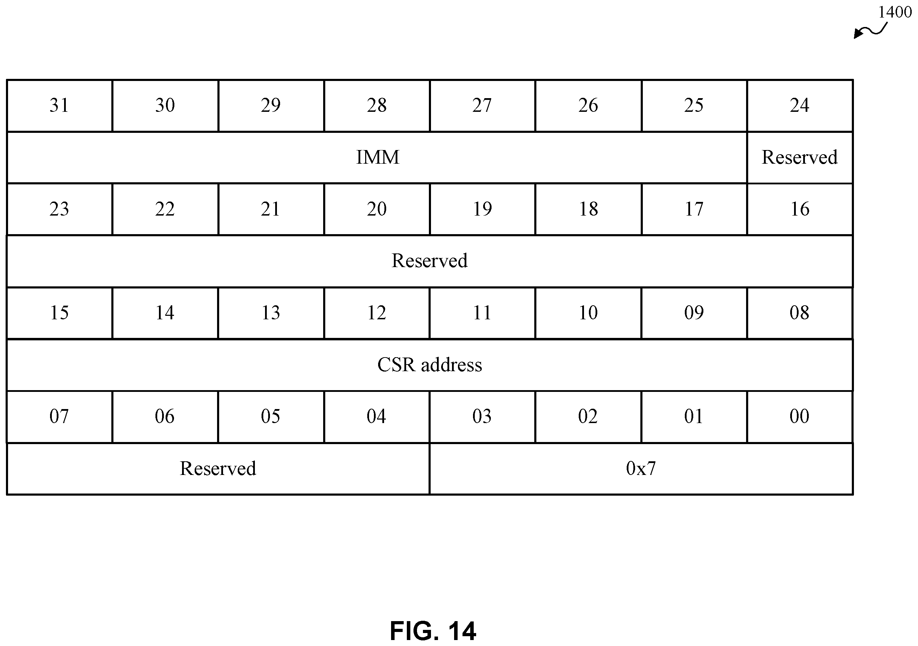

**FIG. 14** illustrates an example command 1400 in accordance with one or more implementations as described herein. In some configurations, one or more aspects of command 1400 may be implemented by or in conjunction with cache processor 140 of FIG. 1 and/or cache processor 230 of FIG. 2. In some configurations, one or more aspects of data structure 600 may be implemented by or in conjunction with machine 105, components of machine 105, or any combination thereof.

In the illustrated example, command 1400 depicts a format associated with a command of the cache instruction set described herein. Command 1400 may be part of a cache instruction set that enables a user to program cache algorithms, allowing the user to adapt cache algorithms for the workload characteristics of a given application. Thus, command 1400 may enable a fully programmable ISAs that enable various user programmable cache algorithms that are configured according to application constraints (e.g., processing constraints, memory bandwidth constraints, network bandwidth constraints, etc.).

Command 1400 may depict a format associated with a CSR write command of the cache instruction set described herein. In the illustrated example, bits 31:25 may indicate an immediate value (e.g., a memory address); bits 24:16 may be reserved; bits 15:8 may indicate a CSR address (e.g., address of a device CSR, address of a cache CSR); bits 7:4 may be reserved; bits 3:0 may indicate the opcode for a CSR write command.

A cache processor may execute a CSR write command, such as command 1400, to write a CSR register (e.g., at the indicated CSR address). A cache processor may execute a CSR write command, such as command 1400, to read data from a memory (e.g., at the memory address indicated in the immediate value; read data from memory and write the data to CSR; write control data and/or system status data read from memory). A cache processor may execute a CSR write command such as command 1400 to store a status of the cache system (e.g., machine 105, system 300, etc.). A cache processor may execute a CSR write command, such as command 1400, to debug a cache operation (e.g., of a memory request routine, cache eviction routine) based on writing to a CSR.

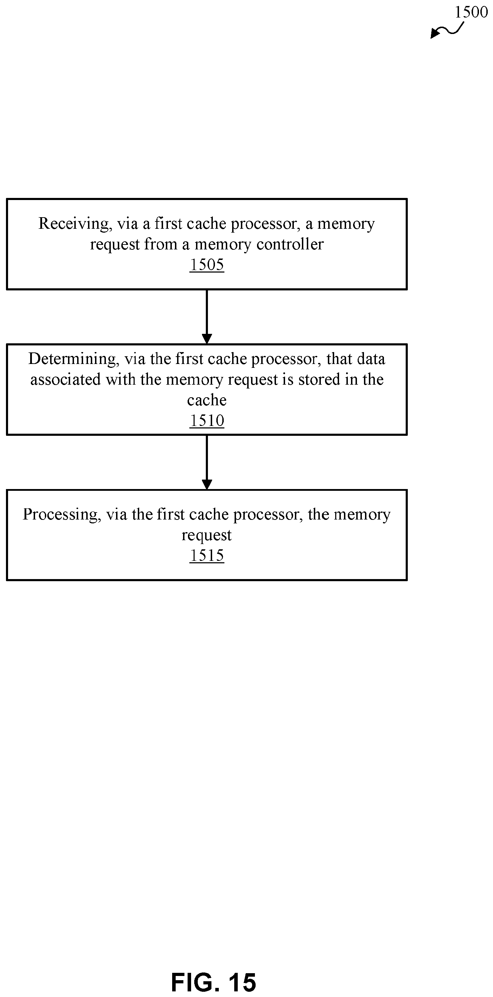

**FIG. 15** depicts a flow diagram illustrating an example method 1500 associated with the disclosed systems, in accordance with example implementations described herein. In some configurations, one or more aspects of method 1500 may be implemented by or in conjunction with cache processor 140 of FIG. 1 and/or cache processor 230 of FIG. 2. In some configurations, one or more aspects of method 1500 may be implemented by or in conjunction with machine 105, components of machine 105, or any combination thereof. The depicted method 1500 is just one implementation and one or more operations of method 1500 may be rearranged, reordered, omitted, and/or otherwise modified such that other implementations are possible and contemplated.

At 1505, method 1500 may include receiving, via a first cache processor, a memory request from a memory controller. For example, a first cache processor may receive, from a memory controller, a memory request from a memory controller based on the first cache processor executing a poll command of an instruction set that is configured to program at least one aspect of the cache.

At 1510, method 1500 may include determining, via the first cache processor, that data associated with the memory request is stored in the cache. For example, the first cache processor may determine that data associated with the memory request is stored in the cache based on the first cache processor querying a metadata of a shared memory that is shared with a second cache processor of the cache.

At 1515, method 1500 may include processing, via the first cache processor, the memory request. For example, the first processor may process the memory request based on the first processor determining that the data associated with the memory request is stored in the cache (e.g., cache hit).

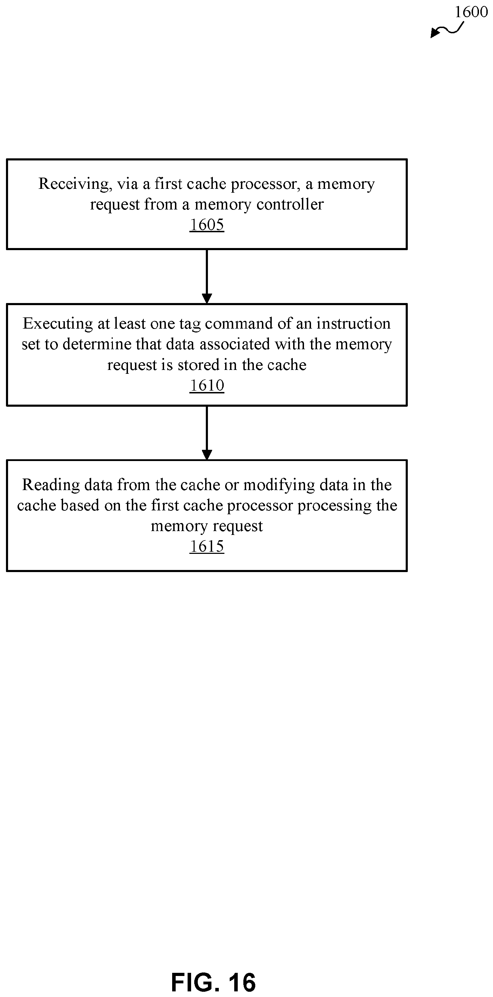

**FIG. 16** depicts a flow diagram illustrating an example method 1600 associated with the disclosed systems, in accordance with example implementations described herein. In some configurations, one or more aspects of method 1600 may be implemented by or in conjunction with cache processor 140 of FIG. 1 and/or cache processor 230 of FIG. 2. In some configurations, one or more aspects of method 1600 may be implemented by or in conjunction with machine 105, components of machine 105, or any combination thereof. The depicted method 1600 is just one implementation and one or more operations of method 1600 may be rearranged, reordered, omitted, and/or otherwise modified such that other implementations are possible and contemplated.

At 1605, method 1600 may include receiving, via a first cache processor, a memory request from a memory controller. For example, a first cache processor may receive, from a memory controller, a memory request from a memory controller based on the first cache processor executing a poll command of an instruction set that is configured to program at least one aspect of the cache.

At 1610, method 1600 may include executing at least one tag command of an instruction set to determine that data associated with the memory request is stored in the cache. For example, the first cache processor may execute at least one tag command of an instruction set (e.g., tag load command, tag compare command, tag store command) to determine that data associated with the memory request is stored in the cache (e.g., cache hit).

At 1615, method 1600 may include reading data from the cache or modifying data in the cache based on the first cache processor processing the memory request. For example, the first cache processor may read data from the cache based on the first cache processor processing the memory request (e.g., based on the memory request including a read request). The first cache processor may modify data in the cache based on the first cache processor processing the memory request. For example, based on the memory request including a write request, the first cache processor may write an updated version of data already in the cache.

In the examples described herein, the configurations and operations are example configurations and operations, and may involve various additional configurations and operations not explicitly illustrated. In some examples, one or more aspects of the illustrated configurations and/or operations may be omitted. In some embodiments, one or more of the operations may be performed by components other than those illustrated herein. Additionally, or alternatively, the sequential and/or temporal order of the operations may be varied.

Certain embodiments may be implemented in one or a combination of hardware, firmware, and software. Other embodiments may be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media.

The word "exemplary" is used herein to mean "serving as an example, instance, or illustration." Any embodiment described herein as "exemplary" is not necessarily to be construed as preferred or advantageous over other embodiments. The terms "computing device ," "user device ," "communication station," "station," "handheld device," "mobile device," "wireless device" and "user equipment" (UE) as used herein refers to a wired and/or wireless communication device such as a switch, router, network interface controller, cellular telephone, smartphone, tablet, netbook, wireless terminal, laptop computer, a femtocell, High Data Rate (HDR) subscriber station, access point, printer, point of sale device, access terminal, or other personal communication system (PCS) device. The device may be wireless, wired, mobile, and/or stationary.

As used within this document, the term "communicate" is intended to include transmitting, or receiving, or both transmitting and receiving. Similarly, the bidirectional exchange of data between two devices (both devices transmit and receive during the exchange) may be described as 'communicating', when only the functionality of one of those devices is being claimed. The term "communicating" as used herein with respect to wired and/or wireless communication signals includes transmitting the wired and/or wireless communication signals and/or receiving the wired and/or wireless communication signals. For example, a communication unit, which is capable of communicating wired and/or wireless communication signals, may include a wired/wireless transmitter to transmit communication signals to at least one other communication unit, and/or a wired/wireless communication receiver to receive the communication signal from at least one other communication unit.

Some embodiments may be used in conjunction with various devices and systems, for example, a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some embodiments may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like.

Some embodiments may be used in conjunction with one or more types of wireless communication signals and/or systems following one or more wireless communication protocols, for example, Radio Frequency (RF), Infrared (IR), Frequency-Division Multiplexing (FDM), Orthogonal FDM (OFDM), Time-Division Multiplexing (TDM), Time-Division Multiple Access (TDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{™}, Global Positioning System (GPS), Wi-Fi, Wi-Max, ZigBee^{™}, Ultra-Wideband (UWB), Global System for Mobile communication (GSM), 2G, 2.5G, 3G, 3.5G, 4G, Fifth Generation (5G) mobile networks, 3GPP, Long Term Evolution (LTE), LTE advanced, Enhanced Data rates for GSM Evolution (EDGE), or the like. Other embodiments may be used in various other devices, systems, and/or networks.

Although an example processing system has been described above, embodiments of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more components of computer program instructions, encoded on computer storage medium for execution by, or to control the operation of, information/data processing apparatus. Alternatively, or in addition, the program instructions can be encoded on an artificially-generated propagated signal, for example a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (for example multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, for example an FPGA (field programmable gate array) or an ASIC (application-specific integrated circuit). The apparatus can also include, in addition to hardware, code that creates an execution environment for the computer program in question, for example code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a component, component, subroutine, object, or other unit suitable for use in a computing environment. A computer program may, but need not, correspond to a file in a file system. A program can be stored in a portion of a file that holds other programs or information/data (for example one or more scripts stored in a markup language document), in a single file dedicated to the program in question, or in multiple coordinated files (for example files that store one or more components, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, for example magnetic, magneto-optical disks, or optical disks. However, a computer need not have such devices. Devices suitable for storing computer program instructions and information/data include all forms of non-volatile memory, media and memory devices, including by way of example semiconductor memory devices, for example EPROM, EEPROM, and flash memory devices; magnetic disks, for example internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, for example a CRT (cathode ray tube) or LCD (liquid crystal display) monitor, for displaying information/data to the user and a keyboard and a pointing device, for example a mouse or a trackball, by which the user can provide input to the computer. Other kinds of devices can be used to provide for interaction with a user as well; for example, feedback provided to the user can be any form of sensory feedback, for example visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, for example as an information/data server, or that includes a middleware component, for example an application server, or that includes a front-end component, for example a client computer having a graphical user interface or a web browser through which a user can interact with an embodiment of the subject matter described herein, or any combination of one or more such back-end, middleware, or front-end components. The components of the system can be interconnected by any form or medium of digital information/data communication, for example a communication network. Examples of communication networks include a local area network ("LAN") and a wide area network ("WAN"), an inter-network (for example the Internet), and peer-to-peer networks (for example ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (for example an HTML page) to a client device (for example for purposes of displaying information/data to and receiving user input from a user interacting with the client device). Information/data generated at the client device (for example a result of the user interaction) can be received from the client device at the server.

While this specification contains many specific embodiment details, these should not be construed as limitations on the scope of any embodiment or of what may be claimed, but rather as descriptions of features specific to particular embodiments. Certain features that are described herein in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain embodiments, multitasking and parallel processing may be advantageous.

Many modifications and other examples as set forth herein will come to mind to one skilled in the art to which these embodiments pertain having the benefit of the teachings presented in the foregoing descriptions and the associated drawings. Therefore, it is to be understood that the embodiments are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method of programmable cache algorithms, the method comprising:
receiving, from a memory controller, a memory request based on a first cache processor of a cache executing a poll command of an instruction set that is configured to program at least one aspect of the cache in association with at least one of a cache control and status register, CSR, or a device CSR;
determining that data associated with the memory request is stored in the cache based on the first cache processor querying a metadata of a shared memory that is shared with a second cache processor of the cache; and
processing, via the first cache processor, the memory request based on determining that the data associated with the memory request is stored in the cache.

2. The method of claim 1, wherein processing the memory request comprises the first cache processor reading the data associated with the memory request from the cache based on the memory request including a read request.

3. The method of claim 1 or 2, wherein processing the memory request comprises the first cache processor modifying the data that is in the cache and associated with the memory request based on the memory request including a write request.

4. The method of any one of claims 1 to 3, wherein processing the memory request comprises the first cache processor executing a tag load command of the instruction set to load a tag of data in the cache to a tag register, executing a tag compare command of the instruction set to compare the tag of the data in the cache to a tag of the data associated with the memory request, updating an access frequency attribute of the tag of the data in the cache, and executing a tag store command of the instruction set to store, in the metadata of the shared memory, the updated tag of the data in the cache.

5. The method of any one of claims 1 to 4, further comprising determining a memory address of the data associated with the memory request based on the first cache processor querying the cache CSR.

6. The method of any one of claims 1 to 5, wherein the first cache processor querying the metadata is based on the first cache processor querying the device CSR for an address of the metadata.

7. The method of any one of claims 1 to 6, wherein the first cache processor executing the poll command of the instruction set is based on the first cache processor querying the device CSR for a starting address of a cache request routine.

8. The method of any one of claims 1 to 7, further comprising accessing, via the first cache processor, a storage device to process a second memory request, the storage device being accessed based on the first cache processor determining a state of data associated with the second memory request in relation to the cache and the storage device.

9. The method of claim 8, wherein processing the memory request comprises the first cache processor writing data to the storage device based on the second memory request including a second write request or reading data from the storage device based on the second memory request including a second read request.

10. The method of claim 8 or 9, wherein processing the second memory request comprises the first cache processor executing a tag load command of the instruction set to load a tag of data in the cache to a tag register, executing a tag compare command of the instruction set to compare the tag of data in the cache to a tag of the data associated with the second memory request.

11. The method of any one of claims 8 to 10, wherein processing the second memory request comprises the second cache processor:
determining that the cache includes available space to store the data associated with the second memory request based on the second cache processor querying the cache CSR for a status of the cache;
copying the data associated with the second memory request from a storage device to the cache based on the second memory request including a read request or writing the data associated with the second memory request to the cache based on the second memory request including a write request; and
executing a tag store command of the instruction set to store, in the metadata of the shared memory, a tag of the data associated with the second memory request.

12. The method of any one of claims 8 to 10, wherein processing the second memory request comprises the second cache processor:
determining that the cache is full based on the second cache processor querying the cache CSR for a status of the cache;
evicting a portion of data from the cache based on the second cache processor implementing an eviction policy that the second cache processor indicates in at least one command of the instruction set; and
writing the portion of data evicted from the cache to a storage device based on the second cache processor determining a mismatch between the portion of data evicted from the cache and data in the storage device associated with the portion of data evicted from the cache.

13. The method of any one of claims 1 to 12, wherein:
the instruction set is implemented on a cache-coherent tiered memory device that comprises the memory controller, the cache, the first cache processor, the second cache processor, and a storage device,
the cache comprises a dynamic random-access memory, and
the storage device comprises a NAND storage device.

14. A cache device, comprising:
a cache;
a storage device;
a memory controller;
a first cache processor; and
a second cache processor, wherein:
the memory controller is configured to receive a memory request based on the first cache processor executing a poll command of an instruction set that is configured to program at least one aspect of the cache in association with at least one of a cache control and status register, CSR, or a device CSR;
the first cache processor is configured to determine that data associated with the memory request is stored in the cache based on the first cache processor querying a metadata of a shared memory that is shared with the second cache processor; and
the first cache processor is configured to process the memory request based on determining that the data associated with the memory request is stored in the cache,
wherein the cache device is configured to perform the method according to any one of claims 1 to 12.

15. A non-transitory computer-readable medium storing code that comprises instructions executable by a first cache processor to perform the method of any one of claims 1 to 12.

## Patentansprüche

1. Ein Verfahren für programmierbare Cache-Algorithmen, wobei das Verfahren umfasst:
Empfangen einer Speicheranforderung von einem Speichercontroller, basierend auf einem ersten Cache-Prozessor eines Caches, welcher einen Abfragebefehl eines Befehlssatzes ausführt, welcher derart konfiguriert ist, dass er mindestens einen Aspekt des Caches in Verbindung mit mindestens einem von einem Cache-Steuerungs- und Statusregister, CSR, oder einem CSR einer Vorrichtung programmiert;
Feststellen, dass Daten, welche mit der Speicheranforderung verbunden sind, im Cache gespeichert sind, basierend auf dem ersten Cache-Prozessor, welcher Metadaten eines gemeinsamen Speichers abfragt, welcher mit einem zweiten Cache-Prozessor des Caches gemeinsam genutzt wird; und
Verarbeiten der Speicheranforderung über den ersten Cache-Prozessor basierend auf der Feststellung, dass die mit der Speicheranforderung verbundenen Daten im Cache gespeichert sind.

2. Das Verfahren nach Anspruch 1, wobei die Verarbeitung der Speicheranforderung umfasst, dass der erste Cache-Prozessor die mit der Speicheranforderung verbundenen Daten aus dem Cache auf der Grundlage der Speicheranforderung einschließlich einer Leseanforderung liest.

3. Das Verfahren nach Anspruch 1 oder 2, wobei die Verarbeitung der Speicheranforderung umfasst, dass der erste Cache-Prozessor die Daten, welche sich im Cache befinden und mit der Speicheranforderung assoziiert sind, basierend auf der Speicheranforderung, einschließlich einer Schreibanforderung, modifiziert.

4. Das Verfahren nach einem der Ansprüche 1 bis 3, wobei die Verarbeitung der Speicheranforderung umfasst, dass der erste Cache-Prozessor einen Tag-Lade-Befehl des Befehlssatzes ausführt, um ein Daten-Tag im Cache in ein Tag-Register zu laden, einen Tag-Vergleichsbefehl des Befehlssatzes ausführt, um das Tag der Daten im Cache mit einem Tag der Daten zu vergleichen, welche mit der Speicheranforderung verbunden sind, ein Zugriffsfrequenzattribut des Tags der Daten im Cache aktualisiert und einen Tag-Speicherbefehl des Befehlssatzes ausführt, um das aktualisierte Tag der Daten im Cache in den Metadaten des gemeinsamen Speichers zu speichern.

5. Das Verfahren nach einem der Ansprüche 1 bis 4, das ferner das Bestimmen einer Speicheradresse der mit der Speicheranforderung verbundenen Daten auf der Grundlage der Abfrage des Cache-CSR durch den ersten Cache-Prozessor umfasst.

6. Das Verfahren nach einem der Ansprüche 1 bis 5, wobei der erste Cache-Prozessor, der die Metadaten abfragt, auf der Grundlage des ersten Cache-Prozessors die CSR der Vorrichtung nach einer Adresse der Metadaten abfragt.

7. Das Verfahren nach einem der Ansprüche 1 bis 6, wobei der erste Cache-Prozessor, der den Abfragebefehl des Befehlssatzes ausführt, darauf basiert, dass der erste Cache-Prozessor das CSR einer Vorrichtung nach einer Startadresse einer Cache-Anforderungsroutine abfragt.

8. Das Verfahren nach einem der Ansprüche 1 bis 7, das ferner umfasst: Zugreifen auf eine Speichervorrichtung über den ersten Cache-Prozessor, um eine zweite Speicheranforderung zu verarbeiten, wobei auf die Speichervorrichtung zugegriffen wird, basierend darauf, dass der erste Cache-Prozessor einen Zustand von Daten bestimmt, die mit der zweiten Speicheranforderung in Bezug auf den Cache und die Speichervorrichtung assoziiert sind.

9. Das Verfahren nach Anspruch 8, wobei die Verarbeitung der Speicheranforderung umfasst, dass der erste Cache-Prozessor Daten auf der Grundlage der zweiten Speicheranforderung, welche eine zweite Schreibanforderung umfasst, in die Speichervorrichtung schreibt oder Daten auf der Grundlage der zweiten Speicheranforderung, welche eine zweite Leseanforderung umfasst, aus der Speichervorrichtung liest.

10. Das Verfahren nach Anspruch 8 oder 9, wobei die Verarbeitung der zweiten Speicheranforderung umfasst, dass der erste Cache-Prozessor einen Tag-Lade-Befehl des Befehlssatzes ausführt, um ein Daten-Tag im Cache in ein Tag-Register zu laden, und einen Tag-Vergleichsbefehl des Befehlssatzes ausführt, um das Daten-Tag im Cache mit einem Tag der Daten zu vergleichen, welche mit der zweiten Speicheranforderung verbunden sind.

11. Das Verfahren nach einem der Ansprüche 8 bis 10, wobei die Verarbeitung der zweiten Speicheranforderung den zweiten Cache-Prozessor umfasst:
Feststellen, dass der Cache verfügbaren Speicherplatz zum Speichern der mit der zweiten Speicheranforderung verbundenen Daten enthält, basierend darauf, dass der zweite Cache-Prozessor den Cache-CSR nach einem Status des Caches abfragt;
Kopieren der mit der zweiten Speicheranforderung verbundenen Daten von einer Speichervorrichtung in den Cache auf der Grundlage der zweiten Speicheranforderung, welche eine Leseanforderung umfasst, oder Schreiben der mit der zweiten Speicheranforderung verbundenen Daten in den Cache auf der Grundlage der zweiten Speicheranforderung, welche eine Schreibanforderung umfasst; und
Ausführen eines Tag-Speicherbefehls des Befehlssatzes, um in den Metadaten des gemeinsam genutzten Speichers ein Tag der mit der zweiten Speicheranforderung verbundenen Daten zu speichern.

12. Das Verfahren nach einem der Ansprüche 8 bis 10, wobei die Verarbeitung der zweiten Speicheranforderung den zweiten Cache-Prozessor umfasst:
Feststellen, dass der Cache voll ist, basierend darauf, dass der zweite Cache-Prozessor den Cache-CSR nach einem Status des Caches abfragt;
Entfernen eines Teils der Daten aus dem Cache auf der Grundlage der Umsetzung einer Entfernungsrichtlinie durch den zweiten Cache-Prozessor, welche der zweite Cache-Prozessor in mindestens einem Befehl des Befehlssatzes angibt; und
Schreiben des aus dem Cache entfernten Teils der Daten in eine Speichervorrichtung auf der Grundlage der Feststellung einer Nichtübereinstimmung zwischen dem aus dem Cache entfernten Teil der Daten und den Daten in der Speichervorrichtung, welche mit dem aus dem Cache entfernten Teil der Daten verbunden ist, durch den zweiten Cache-Prozessor.

13. Das Verfahren nach einem der Ansprüche 1 bis 12, wobei:
der Befehlssatz auf einer cache-kohärenten mehrstufigen Speichervorrichtung implementiert ist, welche den Speichercontroller, den Cache, den ersten Cache-Prozessor, den zweiten Cache-Prozessor und eine Speichervorrichtung umfasst, wobei
der Cache einen dynamischen Direktzugriffsspeicher umfasst, und
die Speichervorrichtung eine NAND-Speichervorrichtung umfasst.

14. Eine Cache-Vorrichtung, umfassend:
einen Cache;
eine Speichervorrichtung;
einen Speichercontroller;
einen ersten Cache-Prozessor; und
einen zweiten Cache-Prozessor, wobei:
der Speichercontroller derart konfiguriert ist, dass er eine Speicheranforderung empfängt, basierend darauf, dass der erste Cache-Prozessor einen Abfragebefehl eines Befehlssatzes ausführt, welcher derart konfiguriert ist, dass er mindestens einen Aspekt des Caches in Verbindung mit mindestens einem von einem Cache-Steuerungs- und Statusregister, CSR, oder einem CSR einer Vorrichtung programmiert;
der erste Cache-Prozessor derart konfiguriert ist, dass er feststellt, dass Daten, welche mit der Speicheranforderung verbunden sind, im Cache gespeichert sind, basierend darauf, dass der erste Cache-Prozessor Metadaten eines gemeinsam genutzten Speichers abfragt, welcher mit dem zweiten Cache-Prozessor gemeinsam genutzt wird; und
der erste Cache-Prozessor derart konfiguriert ist, dass er die Speicheranforderung basierend auf der Feststellung verarbeitet, dass die mit der Speicheranforderung verbundenen Daten im Cache gespeichert sind,
wobei die Cache-Vorrichtung derart konfiguriert ist, dass sie das Verfahren gemäß einem der Ansprüche 1 bis 12 ausführt.

15. Ein nicht flüchtiges, computerlesbares Medium, welches einen Code speichert, der Anweisungen umfasst, welche von einem ersten Cache-Prozessor ausgeführt werden können, um das Verfahren gemäß einem der Ansprüche 1 bis 12 durchzuführen.

## Revendications

1. Procédé d'algorithmes de cache programmables, le procédé comprenant des étapes consistant à:
recevoir, à partir d'un contrôleur de mémoire, une requête mémoire basée sur un premier processeur de cache d'un cache exécutant une commande de scrutation d'un jeu d'instructions configuré pour programmer au moins un aspect du cache en association avec un registre de commande et d'état de cache et/ou d'un un registre de commande et d'état de dispositif ;
déterminer que des données associées à la requête mémoire sont stockées dans le cache sur la base du premier processeur de cache interrogeant des métadonnées d'une mémoire partagée qui est partagée avec un deuxième processeur de cache du cache ; et
traiter, via le premier processeur de cache, la requête mémoire sur la base de la détermination que les données associées à la requête mémoire sont stockées dans le cache.

2. Procédé selon la revendication 1, dans lequel le traitement de la requête mémoire comprend que le premier processeur de cache lit les données associées à la requête mémoire à partir du cache sur la base de la requête mémoire comprenant une requête de lecture.

3. Procédé selon la revendication 1 ou 2, dans lequel le traitement de la requête mémoire comprend que le premier processeur de cache modifie les données qui se trouvent dans le cache et qui sont associées à la requête mémoire sur la base de la requête mémoire comprenant une requête d'écriture.

4. Procédé selon l'une quelconque des revendications 1 à 3, dans lequel le traitement de la requête mémoire comprend que le premier processeur de cache exécute une commande de chargement d'étiquette du jeu d'instructions pour charger une étiquette de données dans le cache dans un registre d'étiquette, exécute une commande de comparaison d'étiquette du jeu d'instructions pour comparer l'étiquette des données dans le cache à une étiquette des données associées à la requête mémoire, met à jour un attribut de fréquence d'accès de l'étiquette des données dans le cache et exécute une commande de stockage d'étiquette du jeu d'instructions pour stocker, dans les métadonnées de la mémoire partagée, l'étiquette mise à jour des données dans le cache.

5. Procédé selon l'une quelconque des revendications 1 à 4, comprenant en outre une étape consistant à déterminer une adresse mémoire des données associées à la requête mémoire sur la base du premier processeur de cache interrogeant le registre de commande et d'état de cache de cache.

6. Procédé selon l'une quelconque des revendications 1 à 5, dans lequel l'interrogation des métadonnées par le premier processeur de cache est basée sur le fait que le premier processeur de cache interroge le registre de commande et d'état de cache de dispositif pour une adresse des métadonnées.

7. Procédé selon l'une quelconque des revendications 1 à 6, dans lequel l'exécution, par le premier processeur de cache, de la commande de scrutation du jeu d'instructions est basée sur le fait que le premier processeur de cache interroge le registre de commande et d'état de cache de dispositif pour une adresse de départ d'une routine de requête de cache.

8. Procédé selon l'une quelconque des revendications 1 à 7, comprenant en outre une étape consistant à accéder, via le premier processeur de cache, à un dispositif de stockage pour traiter une deuxième requête mémoire, le dispositif de stockage étant accédé sur la base du premier processeur de cache déterminant un état de données associées à la deuxième requête mémoire en relation avec le cache et le dispositif de stockage.

9. Procédé selon la revendication 8, dans lequel le traitement de la requête mémoire comprend que le premier processeur de cache écrit des données dans le dispositif de stockage sur la base de la deuxième requête mémoire comprenant une deuxième requête d'écriture ou lit des données à partir du dispositif de stockage sur la base de la deuxième requête mémoire comprenant une deuxième requête de lecture.

10. Procédé selon la revendication 8 ou 9, dans lequel le traitement de la deuxième requête mémoire comprend que le premier processeur de cache exécute une commande de chargement d'étiquette du jeu d'instructions pour charger une étiquette de données dans le cache dans un registre d'étiquette et exécute une commande de comparaison d'étiquette du jeu d'instructions pour comparer l'étiquette des données dans le cache à une étiquette des données associées à la deuxième requête mémoire.

11. Procédé selon l'une quelconque des revendications 8 à 10, dans lequel le traitement de la deuxième requête mémoire comprend que le deuxième processeur de cache :
détermine que le cache comprend un espace disponible pour stocker les données associées à la deuxième requête mémoire sur la base du deuxième processeur de cache interrogeant le registre de commande et d'état de cache pour un état du cache ;
copie les données associées à la deuxième requête mémoire à partir d'un dispositif de stockage vers le cache sur la base de la deuxième requête mémoire comprenant une requête de lecture ou écrit les données associées à la deuxième requête mémoire dans le cache sur la base de la deuxième requête mémoire comprenant une requête d'écriture ; et
exécute une commande de stockage d'étiquette du jeu d'instructions pour stocker, dans les métadonnées de la mémoire partagée, une étiquette des données associées à la deuxième requête mémoire.

12. Procédé selon l'une quelconque des revendications 8 à 10, dans lequel le traitement de la deuxième requête mémoire comprend que le deuxième processeur de cache :
détermine que le cache est plein sur la base du deuxième processeur de cache interrogeant le registre de commande et d'état de cache de cache pour un état du cache ;
évince une partie des données du cache sur la base du deuxième processeur de cache mettant en œuvre une stratégie d'éviction que le deuxième processeur de cache indique dans au moins une commande du jeu d'instructions ; et
écrit la partie des données évincée du cache dans un dispositif de stockage sur la base du deuxième processeur de cache déterminant une discordance entre la partie des données évincée du cache et des données dans le dispositif de stockage associées à ladite partie évincée.

13. Procédé selon l'une quelconque des revendications 1 à 12, dans lequel :
le jeu d'instructions est implémenté sur un dispositif de mémoire hiérarchisée cohérente en cache qui comprend le contrôleur de mémoire, le cache, le premier processeur de cache, le deuxième processeur de cache et un dispositif de stockage,
le cache comprend une mémoire vive dynamique, et
le dispositif de stockage comprend un dispositif de stockage NAND.

14. Dispositif de cache, comprenant :
un cache ;
un dispositif de stockage ;
un contrôleur de mémoire ;
un premier processeur de cache ; et
un deuxième processeur de cache, dans lequel :
le contrôleur de mémoire est configuré pour recevoir une requête mémoire sur la base du premier processeur de cache exécutant une commande de scrutation d'un jeu d'instructions configuré pour programmer au moins un aspect du cache en association avec au moins l'un d'un registre de commande et d'état de cache ou d'un registre de commande et d'état de cache de dispositif ;
le premier processeur de cache est configuré pour déterminer que des données associées à la requête mémoire sont stockées dans le cache sur la base du premier processeur de cache interrogeant des métadonnées d'une mémoire partagée qui est partagée avec le deuxième processeur de cache ; et
le premier processeur de cache est configuré pour traiter la requête mémoire sur la base de la détermination que les données associées à la requête mémoire sont stockées dans le cache,
le dispositif de cache étant configuré pour effectuer le procédé selon l'une quelconque des revendications 1 à 12.

15. Support informatique non transitoire lisible par ordinateur stockant un code comprenant des instructions exécutables par un premier processeur de cache pour effectuer le procédé selon l'une quelconque des revendications 1 à 12.
